# EUROPEAN PATENT APPLICATION

(11) **EP 1 874 053 A1**
(43) Date of publication of application: **02.01.2008**
(21) Application number: 06731326.2
(22) Date of filing: 06.04.2006
(51) Int. Cl.: H04N 7/173, G06F 13/00, H04L 12/56

(54) **TRANSFER DEVICE**

(30) Priority: 08.04.2005 JP 2005112038
(71) Applicant: MATSUSHITA ELECTRIC INDUSTRIAL CO., LTD., Osaka 571-8501 (JP)
(72) Inventor: KOUDO, Toshikazu c/o Matsushita El. Ind. Co., Ltd., Chuo-ku, Osaka-shi, Osaka 540-6207 (JP); MIHARA, Kazuhiro c/o Matsushita El. Ind. Co., Ltd., Chuo-ku, Osaka-shi, Osaka 540-6207 (JP); TSUJIMURA, Masaharu c/o Matsushita El. Ind. Co., Ltd., Chuo-ku, Osaka-shi, Osaka 540-6207 (JP); NAKATSU, Etsuto c/o Matsushita El. Ind. Co., Ltd., Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2006/307378
(87) International publication number: WO 2006/109699

(57) **Abstract**

A transfer device for receiving packets that were transmitted by a device in a home network onto a transmission path, and transfers the received packet to another device. The stream to be transferred is classified into three types: (i) a type where each of packets constituting the stream is not attached with a time stamp; (ii) a type where each packet is attached with a valid time stamp; and (iii) a type where each packet is attached with an invalid time stamp. The transfer device determines, from among the three types, the type of the stream to be transferred, based on a transfer source device, transfer destination device, and provider of the stream. The transfer device then selects a transmission method by which to transfer the stream, among the time stamp attachment transmission method and the PCR reference transmission method.

## Description

### Technical Field

The present invention relates to a technical field of a home network construction technology.

### Background Art

The home network construction technology is a technology for constructing a home network by interconnecting a settop box, digital TV, BD recording device, AV-HDD device, personal computer and the like based on IEEE1394.
In a home network where a plurality of devices are interconnected based on IEEE1394, the data such as video or audio data, which is serial, real-time and cannot be delayed, should be transmitted in real time. In this real-time transmission, the sender attaches a time stamp, which indicates a transmission time, to each packet, and the receiver refers to the attached time stamp to restore the original packet interval. The receiver then deletes the time stamp and sends each packet to a decoder provided in the own device.

With the above-described structure, even if the packet interval changes while the packets are transferred, the receiver can restore the original equivalent packet interval. This establishment of an equivalent packet interval before and after the transmission by attaching and deleting the time stamps is called "assuring isochronism".
The following documents disclose technologies for transferring streams among devices in a home network.
*Patent Document 1:* Japanese Patent No. 3609508
*Patent Document* 2: Japanese Patent Application Publication No. 2005-026854
*Patent Document* 3: Japanese Patent No. 3575100
*Patent Document* 4: Japanese Patent Application Publication No. 2002-100113
*Patent Document* 5: Japanese Patent Application Publication No. 2002-100114
*Non-Patent Document* 1: *"*Thoroughly Analyzing Next-Generation Optical Disc Technologies (No. 3 in the series)", NIKKEI ELECTRONICS, July 21, 2003
*Non-Patent Document* 2: MPEG Standard ISO/IEC 13818-1

### Disclosure of the Invention

### The Problems the Invention is Going to Solve

Meanwhile, such a home network is generally constructed as a "closed network". The closed network is a network constructed to transmit a stream that is defined in the standard for the application layer of a specific recording medium such as the blu-ray disc. However, in recent years, increasingly demanded is an establishment of the "open network", namely a home network constructed to transmit streams that are obtained from various supply sources such as the broadcast and the Internet.

However, such an open network should deal with various types of streams to which time stamps are attached to assure the isochronism in greatly different formats. When the formats of attaching the time stamps differ from each other greatly, it is difficult to assure the isochronism. When an erroneous playback such as a missing playback occurs in the actuality, the user would not be able to detect which of the sender and the receiver the problem lies in. As a result of this, the user might call the customer service representative of the device maker to ask whether and/or how the failure can be amended, reporting the details of the failure, which is a waste of time and is not pleasant to the user. Further, the quality of the maker would be questioned if the maker received a lot of complaints regarding a situation where the normal playback, which has long been enjoyed by the user, suddenly goes wrong with a supply of a certain kind of stream to the playback device. Due to the fear of such a quality problem, the maker has not been able to "open" the home network.

Another current aspect of the home network is that, although the home network provides a standard playback of a stream by assuring the isochronism, the provision is based on the presumption that the stream transfer between devices is a real-time transfer, namely, dubbing a stream takes the same length of time as the time length of the stream. With this structure, it is impossible to achieve the demand for a high-speed dubbing of a stream in the home network to increase the usefulness of the home network.

One might consider that it would be possible to achieve the demand by increasing the transfer speed to the N times the transfer speed on the transmission path, by applying any of the technologies disclosed in the Patent Document 3, 4 and 5. However, according to the technologies disclosed in the Patent Document 3, 4 and 5, if the transfer speed is increased to the N times, both the transfer source device and the transfer destination device should preliminarily have a value "N" representing the N-times transfer speed. This requires defining a new protocol for transmitting/receiving the value "N". It is considered therefore that these technologies should not be applied to such a home network that includes an old-type device and does not provide a sufficient compatibility with the old-type device. This is because, even if the usefulness is improved with a removal of the old-type device, such a home network adopting the technology is not considered to be welcomed by users, and is not expected to become prevalent among households.

As described above, there are problems that the demand for assuring the isochronism on the transmission path hinders the establishment of an open home network and the improvement of the usefulness of the home network.
It is the first object of the present invention to provide a transfer device that accelerates the establishment of an open home network, keeping the level of the playback quality.
It is the second object of the present invention to provide a transfer device that increases the usefulness in performing the dubbing, while maintaining the compatibility with old-type devices and assuring the playback quality.

### Means to Solve the Problems

The above-described first object is fulfilled by a transfer device for transferring, to another device, a stream that is classified into a plurality of types including a type where each of packets constituting the stream is attached with a time stamp, and another type where each packet is not attached with the time stamp, the transfer device comprising: a determination unit operable to determine, among the plurality of types, a type of the stream to be transferred; and a selection unit operable to select, among a plurality of transmission methods, a transmission method by which the stream is transferred.

The above-described second obj ect is fulfilled by a transfer device for receiving a packet that was transmitted by a device onto a transmission path, and transfers the received packet to another device, the transfer device comprising: a reception unit operable to receive a packet that was transmitted onto the transmission path by a burst transmission; a storage unit operable to store each packet received by the reception unit; and a transmission unit operable to read a plurality of packets from the storage unit, and transmit the read plurality of packets to a transfer destination device while adjusting a transmission interval of the plurality of packets.

### Effects of the Invention

The above-described transfer device for fulfilling the first object can be used to supply a stream from a device, into which the stream was input, to a display device. More specifically, the transfer device can be placed at a relay point of the supply path, then the transfer device selects an appropriate transmission method based on whether or not a time stamp is attached to each packet, or whether a time stamp attached to each packet is valid or invalid. This structure absorbs the difference in whether or not the time stamp is attached to each packet, and the difference in whether the attached time stamp is valid or invalid, maintaining the quality in playing back the stream. With this structure where the transfer device is placed at a relay point, various types of devices are allowed to be present in mixture in the home network. This promotes to make the network more open.

In judging whether or not the time stamp is attached to each packet and whether the attached time stamp is valid or invalid, the transfer device uses, as the materials for the judgment, a transfer source device, transfer destination device, and provider of the stream. These materials for the judgment can be obtained preliminarily in the design stage of the transfer device. This makes it possible to perform the above-described judgment or selection, without analyzing the stream to be transferred, namely, spending such a slight amount of time that can almost be neglected. This structure thus achieves an increased stream transmission speed.

The above-described transfer device for fulfilling the second object can be used to supply a stream from a device, into which the stream is stored, to a display device. More specifically, the transfer device is placed at a relay point of the supply path, and the isochronism between the transfer device as the relay point and a transfer destination device being the display device is assured. This makes it possible to transfer the stream between the transfer source device and the relay point by the burst transmission method in which the isochronism can be neglected. This means that a high-speed dubbing can be performed using the burst transmission between the transfer source device and the relay point. With this structure where the burst transmission is performed between the transfer source device and the relay point, and a transmission assuring the isochronism is performed between the relay point and the transfer destination device, there is no need for the transfer source device and transfer destination device to use a new protocol. That is to say, in a home network including an old-type device, a standard playback and a dubbing are assured without use of a new protocol for transmission. Further, since the burst transmission is available between the transfer source device and the relay point, the band of the transmission path is utilized to the fullest extent, achieving a high-speed packet transmission.

### Brief Description of the Drawing

Fig. 1 shows a home network system in which the transfer device of the present invention is used as a relay point for data transfers.
Fig. 2 shows the internal structure of the transfer device of the present invention.
Fig. 3 shows the internal structure of the transmission unit 6.
Fig. 4 shows how a transport stream is transmitted by the PCR reference transmission.
Fig. 5 shows the internal structure of the time stamp attachment transmission unit 8 and the PCR reference transmission unit 9.
Fig. 6 shows a list of types of time stamps.
Fig. 7 shows a packet with a time stamp attached to the front thereof, and a packet with a time stamp attached to the back thereof.
Fig. 8 is a flowchart showing the judgment procedures of the time stamp type judging unit 5.
Fig. 9 is a flowchart showing the judgment procedures of the time stamp type judging unit 5.
Fig. 10 is a flowchart showing the judgment procedures of the time stamp type judging unit 5.
Fig. 11 is a timing diagram visually describing a missing packet.
Fig. 12 is a flowchart showing the procedures of the real-time monitoring in Embodiment 2.
Fig. 13 shows the internal structure of the transfer device in Embodiment 3.
Fig. 14 shows the internal structure of the transmission unit 6 in Embodiment 3.
Fig. 15 shows an example of the determination table in the cases where (1) an AV-HDD is specified as the transfer destination device, and (2) an AV-HDD is specified as the transfer source device and a DTV/STB is specified as the transfer destination device.
Fig. 16 shows a transfer performed on the home network when the determination table is described as shown in Fig. 15.
Fig. 17 shows an example of the determination table in the cases where (1) a personal computer is specified as the transfer source device, and (2) a WWW site is specified as the provider.
Fig. 18 shows a transfer performed on the home network when the determination table is described as shown in Fig. 17.
Fig. 19 shows an example of the determination table in the case where a D-VHS tape recorder is specified as the transfer source device.
Fig. 20 shows a transfer performed on the home network when the determination table is described as shown in Fig. 19.
Fig. 21 shows an example of the determination table in the case where (1) a BD recorder is specified as the transfer source device, and (2) a hi-vision camera is specified as the transfer source device.
Fig. 22 shows a transfer performed on the home network when the determination table is described as shown in Fig. 21.
Fig. 23 shows an example of the determination table in which device makers are defined in detail.
Fig. 24 is a flowchart showing the processing procedures of the control unit 4 in Embodiment 3.
Fig. 25 is a timing diagram provided to explain a case where the transmission timing of packets, to which PTSs are attached, is deviated since the PCR reference transmission is performed.
Fig. 26 shows an example of the determination table in Embodiment 4.
Fig. 27 shows a transfer performed on the home network when the determination table is described as shown in Fig. 26.
Fig. 28 shows a specific example of the lengthy extension of the interval between PCR packets, which occurs in the PCR reference transmission.
Fig. 29 shows the internal structure of the PCR reference transmission unit 9 in Embodiment 5.
Fig. 30 is a flowchart showing the procedures of the PCR reference transmission unit 9 in Embodiment 5.
Fig. 31 shows the internal structure of the transfer device in Embodiment 6.
Fig. 32 shows the internal structure of the transmission unit 6 in Embodiment 6.
Fig. 33 shows an example of the determination table in Embodiment 6.

### Description of Characters

- 1: reception unit
- 2: storage unit
- 3: management table
- 4: control unit
- 5: time stamp type judging unit
- 6: transmission unit
- 8: time stamp attachment transmission unit
- 9: PCR reference transmission unit
- 10: burst transmission unit
- 11: BD drive
- 12: time stamp re-attachment transmission unit
- 21: read buffer
- 22: clock counter
- 23: source packetizer
- 24: packet transmission unit
- 31: temporary storage unit
- 32: FIFO
- 33: packet transmission unit
- 34: output gate
- 35: down counter
- 36: PCR value extracting unit
- 37: packet interval calculating unit
- 38: packet output detecting unit
- 39: PCR rewriting unit

### Best Mode for Carrying Out the Invention

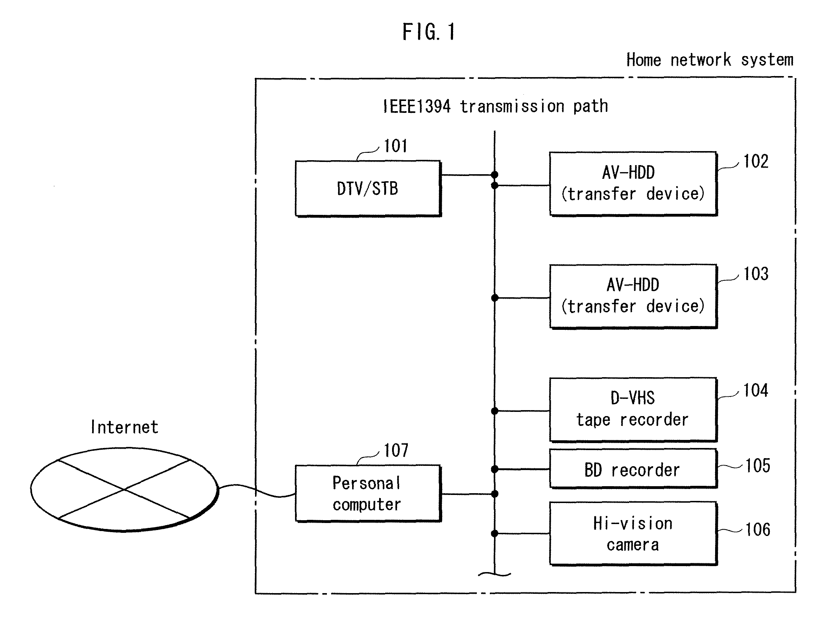

In the following, embodiments of a transfer device of the present invention will be described with reference to the attached drawings. Fig. 1 shows a home network system in which the transfer device of the present invention is used as a relay point for data transfers. The home network system is structured by connecting a plurality of devices (a DTV/STB 101, an AV-HDD 102, an AV-HDD 103, a D-VHS tape recorder 104, a BD recorder 105, a hi-vision camera 106, and a personal computer 107), each of which has an IEEE1394 interface, to an IEEE1394 transmission path. In this home network system, the users can write a stream received by the DTV/STB onto the AV-HDD, and cause the DTV/STB to play back a stream written on the AV-HDD. Further, the user can dub a stream recorded on the AV-HDD onto another device. These recording, playback, and dubbing are performed when corresponding commands are issued to the desired devices.

In the above-described system, the AV-HDD 102 is the transfer device of the present invention. When it receives a record, playback, or dub command, the AV-HDD 102 writes or reads a stream or the like based on the received command. When it receives a record command, the AV-HDD 102 receives packets output from the DTV/STB 101 or the personal computer 107, and writes the received packets onto the embedded hard disk. When it receives a playback command, the AV-HDD 102 reads a stream from the embedded hard disk, and outputs the read stream to the DTV/STB 101. When it receives a dub command, the AV-HDD 102 reads a stream from the embedded hard disk, and outputs the read stream to another transfer device.

The stream stored in the present transfer device is displayed on a GUI of the device as an icon. The user can instruct to play back or dub a desired stream by double clicking or dragging and dropping the icon on the GUI.
Since the IEEE1394 interfaces support isochronous transfers, the stream is transferred while the information of the reception time axis is maintained.

### <Internal Structure of Transfer Device>

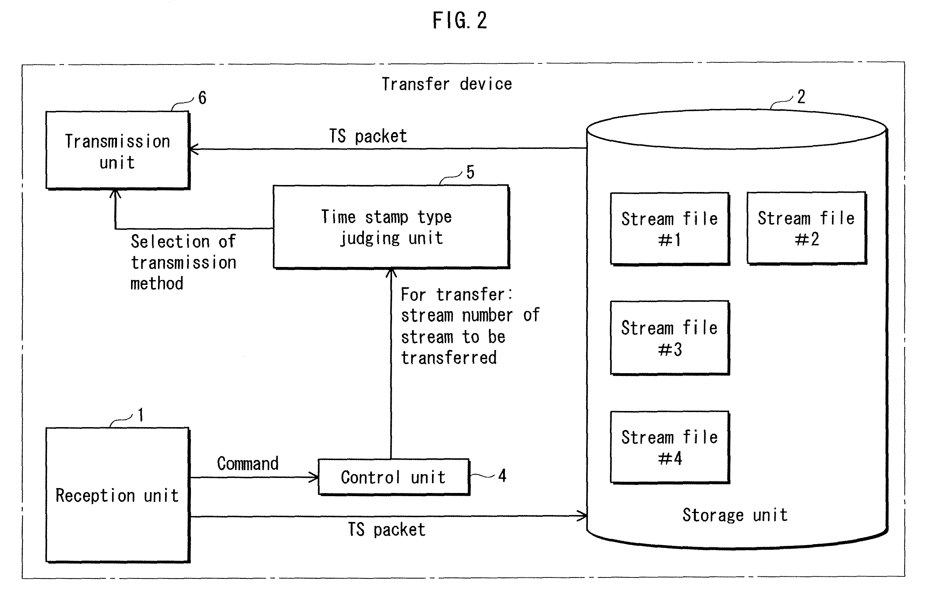

Fig. 2 shows the internal structure of the transfer device of the present invention. As shown in Fig. 2, the transfer device includes a reception unit 1, a storage unit 2, a control unit 4, a time stamp type judging unit 5, and a transmission unit 6.
The reception unit 1 receives packets transmitted from the other device, and writes the received packets onto the storage unit 2. There are available a plurality of packet transmission methods as will be described later, and the reception unit 1 receives packets by one of the plurality of packet transmission methods.

The storage unit 2 is a hard disk drive, and manages the streams, that are written thereon by the reception unit 1, as files on a file system. Hereinafter, a file storing therein a stream is referred to as a stream file. Each stream file is identified by the steam number.
The control unit 4 analyzes a command issued from the other device, and controls the entire transfer device in accordance with the analysis result. When it receives a dub command, the control unit 4 sends, to the time stamp type judging unit 5, a stream number of a stream to be transferred.

When it transfers a stream to the other device, the time stamp type judging unit 5 receives a stream number of the stream to be transferred, analyzes the stream corresponding to the received stream number, judges, based on the bit assignment pattern of each packet, whether or not the packet has been attached a time stamp and whether or not the attached time stamp is valid, and causes the transmission unit 6 to transmit the packet by a transmission method selected in accordance with the judgment result. Up to now, the internal structure of the transfer device has been described.

The transmission unit 6 reads a stream from the storage unit 2, and transmits the read stream to a transfer destination device. There are available a plurality of packet transmission methods, and the transmission unit 6 selects an appropriate one from among the plurality of packet transmission methods.

### <Internal Structure of Transmission Unit 6>

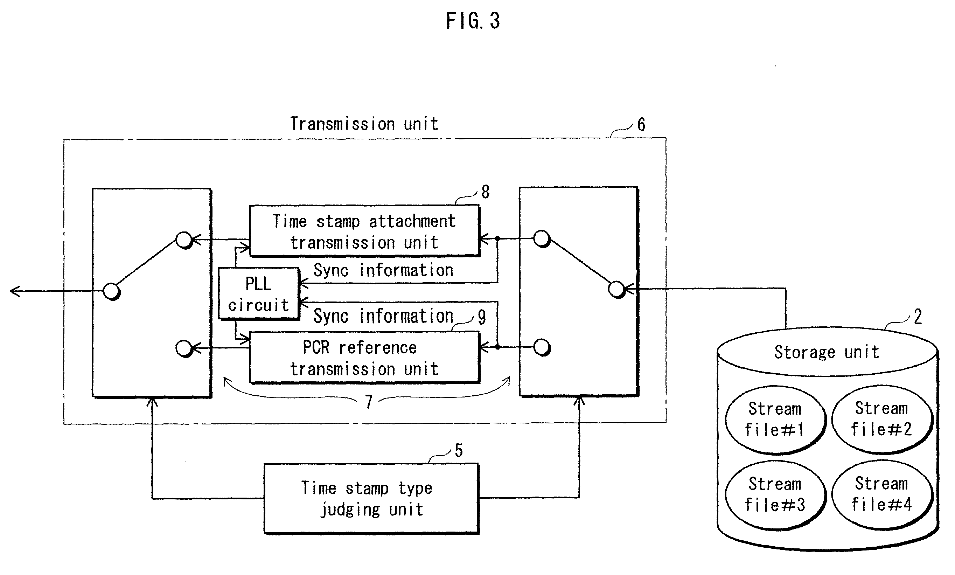

Fig. 3 shows the internal structure of the transmission unit 6. As shown in Fig. 3, the transmission unit 6 includes a time stamp attachment transmission unit 8 and a PCR reference transmission unit 9, and a switch 7 switches between transmissions by the time stamp attachment transmission unit 8 and the PCR reference transmission unit 9, based on the judgment result of the time stamp type judging unit 5. Here, the time stamp attachment transmission unit 8 and the PCR reference transmission unit 9 will be described.

### <Time stamp attachment transmission Unit 8>

The time stamp attachment transmission unit 8 performs the time stamp attachment transmission. In the time stamp attachment transmission, a time stamp is attached to each packet read from the storage unit 2 and each packet with the time stamp is transmitted.
A term "ATS" (Arrival Time Stamp) is often used as representing a time stamp. Specifically speaking, the term ATS is used in the case where a real-time transfer, namely an isochronous transfer is performed. On the other hand, a transport stream may be transferred via the Internet, an anisochronous interface or the like. In such a case, it is inappropriate to use the term ATS. Accordingly, in the present application, the term "time stamp" is used as having broader meaning than the arrival time stamp, including the case where a transport stream, is transferred via the Internet or the like.

### <PCR reference transmission unit 9>

The PCR reference transmission unit 9 performs the PCR reference transmission. In the PCR reference transmission, a packet is transmitted after a packet transmission timing for the packet is adjusted based on the PCR included in the stream. This transmission method is described in detail in Patent Documents 1 and 2. In this transmission method, each packet is transmitted by referring to the PCR contained in the stream. This method is based on the fact that when a transport stream received via a network or the like is recorded or played back, isochronous transfers are not performed. This PCR reference transmission can assure the isochronism of a transport stream that was received under a condition where the isochronism was not assured. As a result of this, the transmission method can achieve a standard playback.

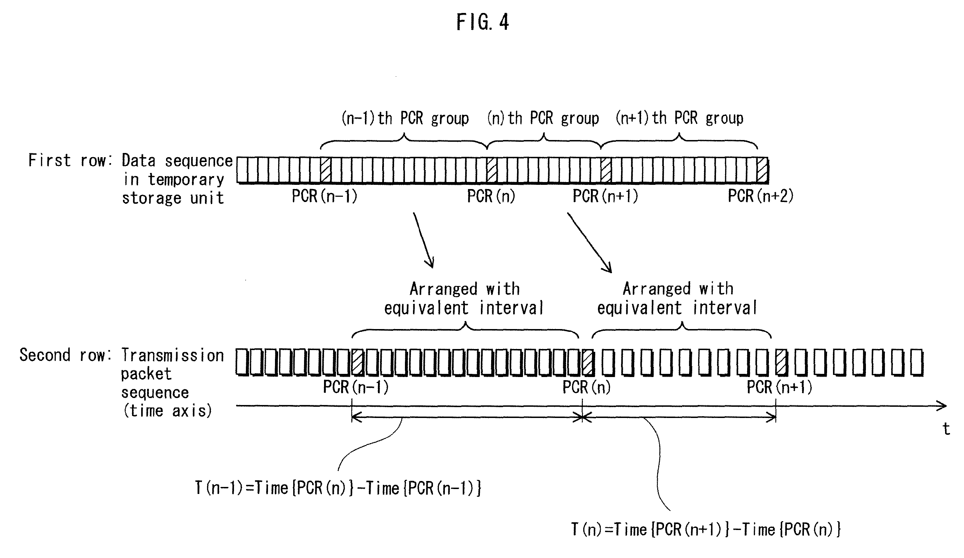

The transport stream transmission method in the PCR reference transmission will be described with reference to Fig. 4.
The first row of Fig. 4 indicates a sequence of packets that were read out onto a temporary storage unit to for transmitting a recorded transport stream. The read-out packets are managed in units of PCR packets. For example, the read-out packets are divided into PCR groups including the (n-1)^{th} PCR group, the n^{th} PCR group, and the (n+1)^{th} PCR group. The transmission timing of each PCR packet is determined by the STC (System Time Clock) counter. The STC counter performs counting based on the standard system clock (27MHz). With this counting by the STC counter, the transmission timings are assured with an allowance of 27MHz ±30ppm for direct current components and with an allowance of ±500nsec for alternate current components, as defined in the MPEG standard.

When the packets belonging to the (n-1)^{th} group are transmitted, first a PCR packet interval T(n-1) is calculated by subtracting a PCR value Time {PCR(n-1)} written in the PCR(n-1), from a PCR value Time{PCR(n)} written in the PCR(n), then the value T(n-1) is divided by a total number of packets included in the (n-1)^{th} PCR group. The quotient of this division becomes the interval between packets belonging to the (n-1)^{th} PCR group. That is to say, the packets belonging to a PCR group are transferred at a constant packet rate. Similarly, the packets belonging to the n^{th} PCR group are transferred at a constant packet rate that is obtained in the same manner.

Up to now, the PCR reference transmission has been described.

### <Internal Structure of Time stamp attachment transmission Unit 8 and PCR reference transmission Unit 9>

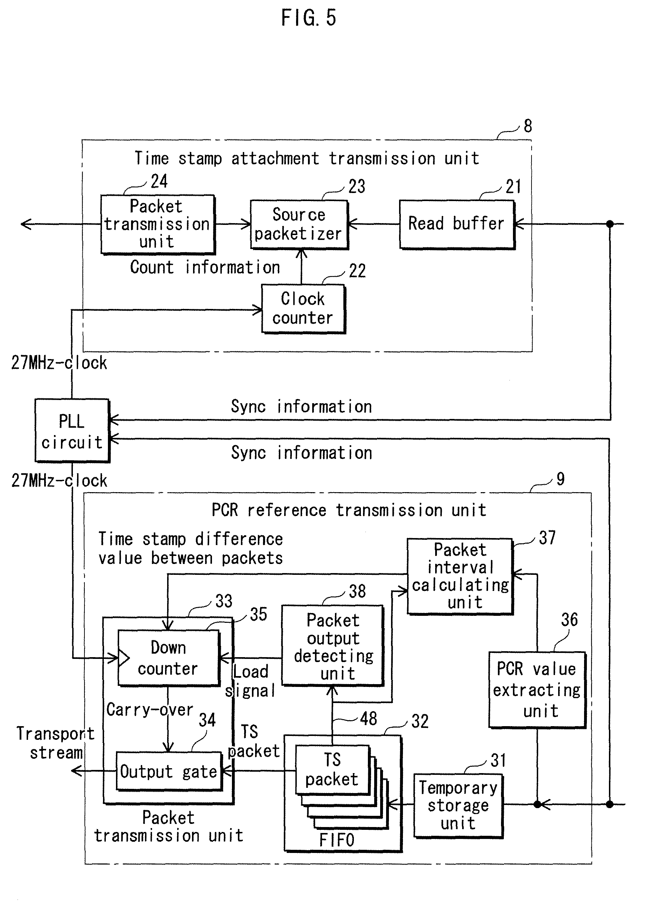

Fig. 5 shows the internal structure of the time stamp attachment transmission unit 8 and the PCR reference transmission unit 9. Here, the internal structure of these constituent elements will be described.
First, the internal structure of the time stamp attachment transmission unit 8 will be described. As shown in Fig. 5, the time stamp attachment transmission unit 8 includes a read buffer 21, a clock counter 22, a source packetizer 23, and a packet transmission unit 24.

The read buffer 21 stores a plurality of packets read out from the storage unit 2.
The clock counter 22 counts a standard clock generated by locking the PLL circuit using the PCR (Program Clock Reference) contained in the transport stream.
The source packetizer 23 attaches a time stamp, which indicates a time at which a packet read out from the storage unit 2 arrived the read buffer 21, to each packet.

The packet transmission unit 24 transmits a packet with a time stamp attached thereto. Up to now, the time stamp attachment transmission unit 8 has been described.
Next, the internal structure of the PCR reference transmission unit 9 will be described. As shown in Fig. 5, the PCR reference transmission unit 9 includes a temporary storage unit 31, a FIFO 32, a packet transmission unit 33, an output gate 34, a down counter 35, a PCR value extracting unit 36, and a packet interval calculating unit 37.

The temporary storage unit 31 temporarily holds packets read out from the storage unit 2.
The FIFO 32 holds packets, which are output from the temporary storage unit 31, in the first-in first-out manner.
The packet transmission unit 33 transmits the packets, which are held by the FIFO 32 in the first-in first-out manner, to the other device.
The output gate 34 is a gate that opens when a carry-over occurs in the down counter 35, and this opening of the gate causes the packets held by the FIFO 32 to be transmitted to the other device.

The down counter 35 receives a load signal that is output when the packet transmission unit 33 transmits a packet, loads a count value from the packet interval calculating unit 37, and starts down counting. The down counter 35 issues a carry-over signal when the counted value reaches zero. The PCR value extracting unit 36 obtains a PCR value from a PCR packet contained in the stream.

The packet interval calculating unit 37 obtains a PCR packet interval T(n-1) = Time{PCR(n)} - Time{PCR(n-1)}, from PCR values written in the PCR (n), which is a given PCR contained in the stream, and the PCR(n-1). The packet interval calculating unit 37 also obtains the number of packets M contained in a range from the PCR(n-1) to the PCR(n). The packet interval calculating unit 37 then calculates a time stamp difference value (= T(n-1) ÷ M) using the obtained values. The time stamp difference value calculated in this way is set in the down counter 35 as an initial value. With this setting, the transmission interval per packet is determined based on the difference between PCRs and based on the number of TS packets contained in the PCR packets.

A packet output detecting unit 38 detects the timing at which the packets are output from the FIFO 32, and outputs load signals to the down counter 35 at the detected timing. Upon receiving the load signals, the down counter 35 load the time stamp difference value calculated by the packet interval calculating unit 37, as a counted value.

### <Types of Time Stamps>

Next, how the time stamp type judging unit 5 determines the type of the time stamp will be described in detail.

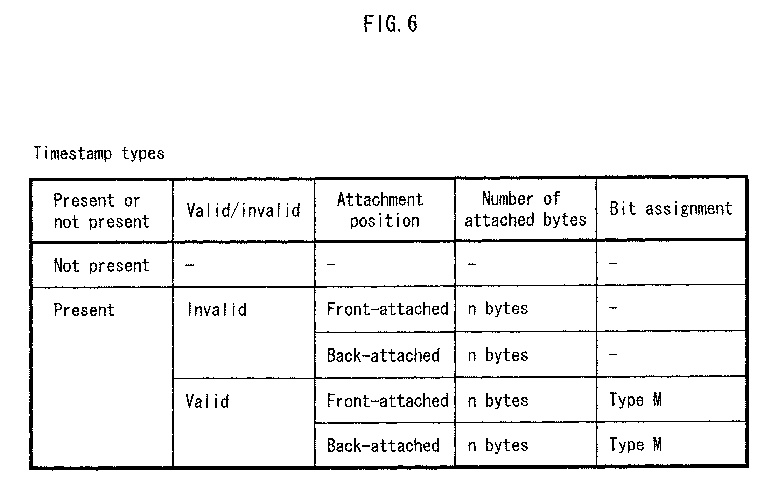

Fig. 6 shows a list of types of time stamps. As shown in Fig. 6, there are the following types of time stamps.
(1) Present or not present
(2) Valid or invalid (valid/invalid)
(3) Attachment position
(4) Number of attached bytes
(5) Bit assignment

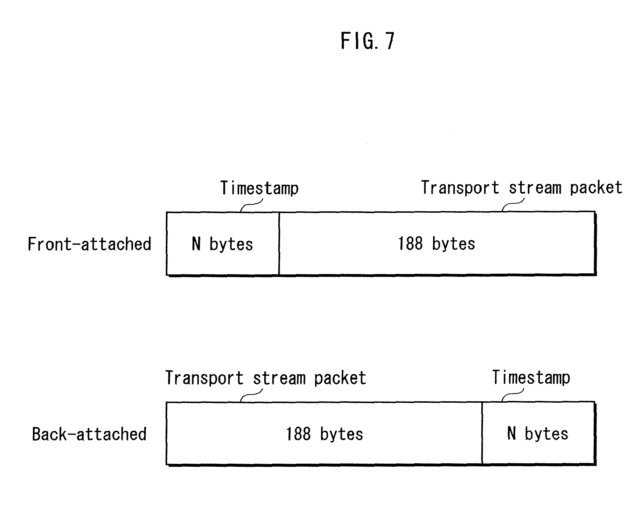

Fig. 7 shows a packet with a time stamp attached to the front thereof, and a packet with a time stamp attached to the back thereof (hereinafter, such time stamps are referred to as front-attached and back-attached time stamps, respectively).

Here, in the "closed network", when only a standardized data structure, like a data structure of a recording medium such as the blu-ray disc, is dealt with, to assure the playback in the home network is easy. However, the home network would include various formats of packets in the case where a hard disk device is used, where a transport stream is generated using a personal computer, or where a stream having been isochronously transferred via the Internet is dealt with. Further, even with a structure where a time stamp is generated using the STC that was generated based on a clock that was generated by locking using the PCR, there may be cases where the attached time stamps are inappropriate to use because the PLL is not accurate or because the PLL cannot be locked since it was transferred at a higher speed than a predetermined speed. When the home network has such various formats of packets therein, it is extremely difficult to assure the playback.

To assure the playback when the home network has such various formats of packets therein, the time stamp type judging unit 5 judges the bit assignment pattern in the packets in the following procedures.

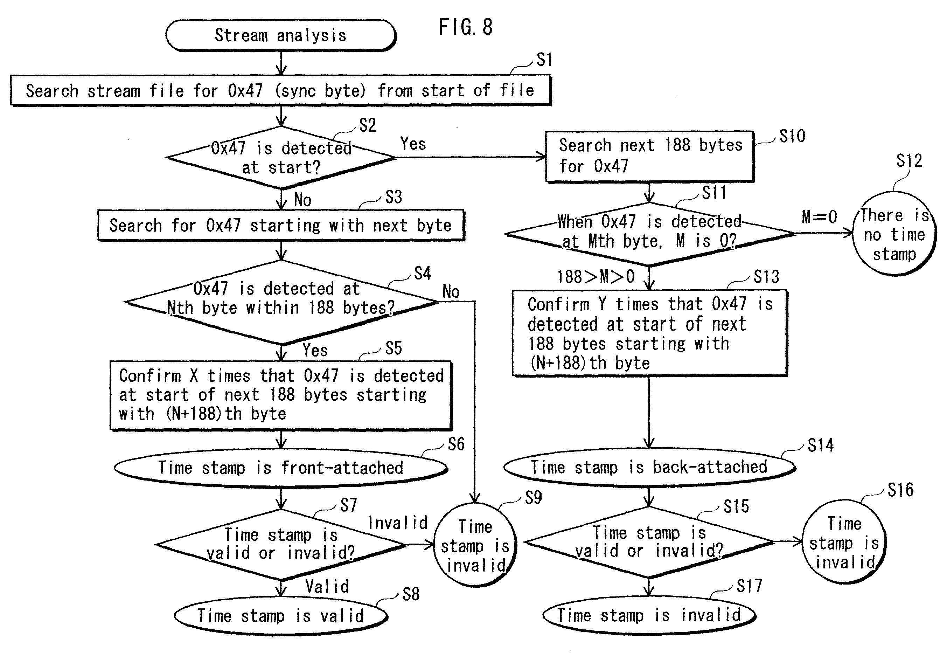

Figs. 8, 9 and 10 are flowcharts showing the procedures in which the time stamp type judging unit 5 judges the bit assignment pattern. In the following, the processing procedures of the time stamp type judging unit 5 will be described with reference to the drawings. In the flowchart shown in Fig. 8, having obtained a transport stream, the time stamp type judging unit 5 searches the stream file for a sync byte (0x47: hexadecimal) from the start of the stream (step S1). The sync byte is attached to the start of a 188-byte transport stream packet. Then, the time stamp type judging unit 5 judges whether or not 0x47 is detected at the start (step S2). When 0x47 is not detected at the start, the time stamp type judging unit 5 continues to search for 0x47 starting with the next byte to detect the start position of a transport stream packet (step S3). The time stamp type judging unit 5 then judges whether or not 0x47 is detected at the N^{th} byte from the start within 188 bytes (step S4).

When 0x47 is detected at the N^{th} byte, the time stamp type judging unit 5 confirms X times that 0x47 is detected at the start of the next 188 bytes starting with the (N+188)^{th} byte (step S5). The time stamp type judging unit 5 then determines that the time stamp is front-attached (step S6). The time stamp type judging unit 5 then judges whether the time stamp is valid or invalid (step S7). When the time stamp is valid, the time stamp type judging unit 5 determines that the time stamp is valid (step S8).

When 0x47 is not detected at the N^{th} byte from the start or when the time stamp is invalid, the time stamp type judging unit 5 determines that the time stamp is invalid (step S9). When 0×47 is detected at the start (Yes in step S2), the time stamp type judging unit 5 searches the next 188 bytes for 0×47 (step S10). When 0×47 is detected at the M^{th} byte, the time stamp type judging unit 5 judges whether or not M is "0" (step S11). When M is "0", the time stamp type judging unit 5 determines that there is no time stamp (step S12). When M is smaller than "188", the time stamp type judging unit 5 determines that the time stamp is back-attached of M bytes. The time stamp type judging unit 5 then confirms Y times that 0x47 is detected at the start of the next 188 bytes starting with the (N+188)^{th} byte (step S13). The time stamp type judging unit 5 then determines that the time stamp is back-attached (step S14). The time stamp type judging unit 5 then judges whether the time stamp is valid or invalid (step S15). When the time stamp is valid, the time stamp type judging unit 5 determines that the time stamp is valid (step S17). When the time stamp is invalid, the time stamp type judging unit 5 determines that the time stamp is invalid (step S16).

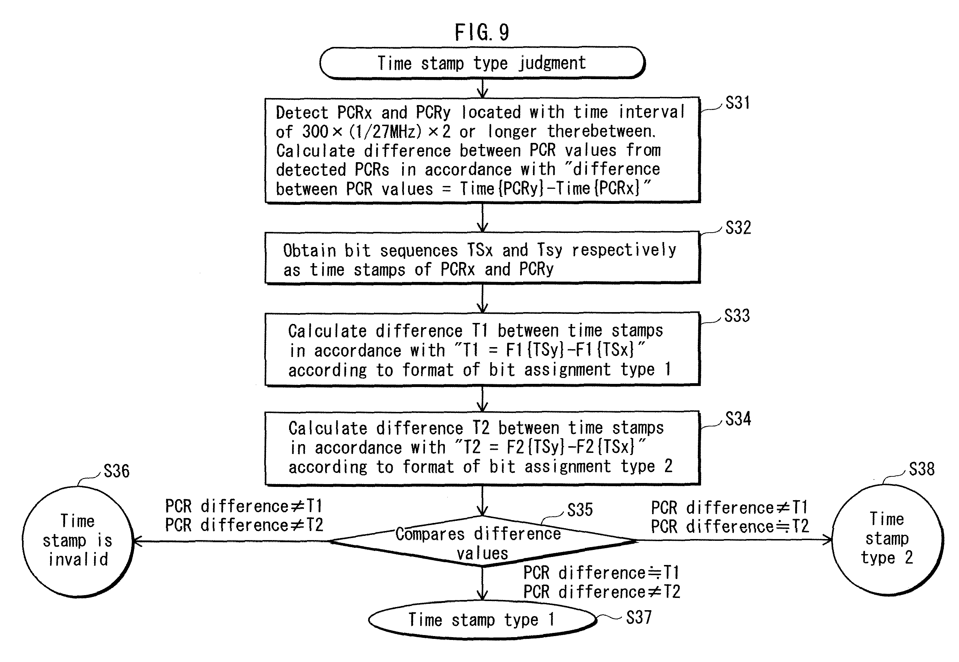

Next, the processing procedures for determining whether the time stamp is valid or invalid will be described. Fig. 9 is a flowchart showing the procedures for determining whether the time stamp is valid or invalid.
As shown in Fig. 9, first the type of the time stamp is determined (step S21). The determination of the type will be described later using an example. After determining the type of the time stamp, the time stamp type judging unit 5 detects the n^{th} PCRpacket. The time stamp type judging unit 5 then extracts a PCR value Time{PCR(n)} from the detected PCR packet. The time stamp type judging unit 5 also extracts a time stamp t(n) in accordance with the determined type of the time stamp (step S22). The time stamp type judging unit 5 then detects the (n+1)^{th} PCR packet, and similarly extracts a PCR value Time{PCR(n+1)} and a time stamp t(n+1) therefrom (step S23).

The time stamp type judging unit 5 then calculates a difference value in accordance with "Time{PCR(n+1)} - Time{PCR(n)}- t (n+1)-t (n)}" (step S24), and judges whether the calculated difference value is smaller than a predetermined value (step S25). When the difference value is smaller than the predetermined value (Yes in step S25), the time stamp type judging unit 5 determines that the time stamp is valid (step S26). When the difference value is greater than the predetermined value (No in step S25), the time stamp type judging unit 5 determines that the time stamp is invalid (step S27).

When it is determined that the time stamp is valid, it means that it is determined that the time stamp attachment transmission is available. As described earlier, the allowance for the PCR is defined as ±500nsec in the MPEG standard. Accordingly, it is preferable that the value for comparison is "500nsec". When a transport stream decoder, which has been confirmed to operate stably even with a slight deviation from a spec, is used, a value greater than "500nsec" may be used as the threshold value.

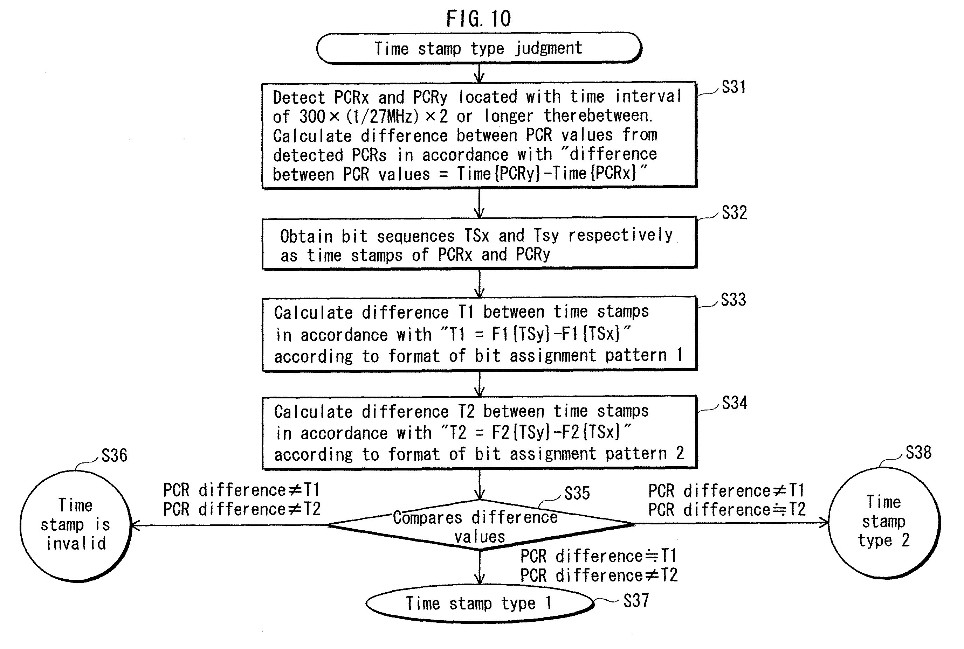

Fig. 10 is a flowchart showing the processing procedures for determining the bit assignment pattern of the time stamp. In general, the time stamp is represented by a count value of a standard clock that is 27MHz. In the present embodiment, the standard clock is fixed to 27MHz. The PCR packet is defined in the adaptation field. More specifically, the PCR packet is defined in two fields : PCR_base (upper 33 bits); and PCR_extension (lower 9 bits), where reserve bits (6 bits) are assigned therebetween. Here, the PCR value is represented as PCR_base ×300+PCR_ext. In the present example, two cases are presumed: (1) a case (bit assignment pattern 1) where the time stamp is defined by the same bit assignment for this PCR value; and (2) a case (bit assignment pattern 2) where the time stamp is defined by a continuous sequence of bits. Fig. 10 shows the procedures for determining which of these types is the time stamp.

As shown in Fig. 10, the time stamp type judging unit 5 detects PCRx and PCRy that are located with a time interval of 300×(1/27MHz)×2 or longer therebetween (step S31).
The upper bits defining the PCR_base represents a value that is 300 times the standard clock. Therefore, when a calculation is made using values of two PCRs, that are located away from each other by a time interval that is two times the value, the result of the calculation differs greatly between a case where the bit assignment is calculated wrongly and a case where the bit assignment is calculated correctly. The detecting of PCRx and PCRy is performed based on this principle. Then, a PCR difference value, which is a difference between PCR values of the detected PCRs, is calculated. That is to say, the difference between PCR values is calculated in accordance with an expression: "difference between PCR values = Time{PCRy}-Time{PCRx}".

After calculating the difference, the time stamp type judging unit 5 obtains bit sequences TSx and Tsy respectively as time stamps of PCRx and PCRy (step S32). The time stamp type judging unit 5 then calculates a difference T1 between the time stamps in accordance with an expression: "T1 = F1{TSy}-F1{TSx}", according to the format of bit assignment pattern 1 (step S33). The time stamp type judging unit 5 then calculates a difference T2 between the time stamps in accordance with an expression: "T2 = F2{TSy}-F2{TSx}", according to the format of bit assignment pattern 2 (step S34).

In the above-described expressions, F1 and F2 represent functions each of which is used to obtain a time stamp value from a bit sequence obtained in correspondence with one of the types. The time stamp type judging unit 5 then compares the calculated PCR difference value with each of the calculated difference values T1 and T2 (step S35). The bit assignment pattern of the time stamp is determined from the comparison result.
When the PCR difference value≠T1 and the PCR difference value≠T2, the time stamp type judging unit 5 determines that the time stamp is invalid (step S36). When the PCR difference value≒T1 and the PCR difference value≠T2, the time stamp type judging unit 5 determines that the time stamp is bit assignment pattern 1 (step S37). When the PCR difference value≠T1 and the PCR difference value≒T2, the time stamp type judging unit 5 determines that the time stamp is bit assignment pattern 2 (step S38).

The sign "≠" used in Fig. 10 means that the difference between the values in comparison is out of a predetermined range, the meaning being different from the general meaning of the sign used in mathematics. Also, the sign "≒" means that the difference between the values in comparison is within the predetermined range.
Here, the predetermined range may be defined using the allowance for the PCR (±500nsec) that is used in the judgment on whether the time stamp is valid or invalid. When a transport stream decoder, which has been confirmed to operate stably even with a slight deviation from a spec, is used, a value greater than "±500nsec" may be used for defining the predetermined range.

With the above-described process,the bit assignment pattern of the time stamp is determined. It should be noted here that there may be a lot of bit assignment patterns other than the above-described ones, but it is possible to determine the bit assignment pattern by performing a similar process.
As described up to now, according to the present embodiment, when a stream input to a certain device is supplied to a display device, the transfer device is placed at a relay point on the path of supplying the stream, and the transfer device transfers the stream. The transfer device selects an appropriate transmission method based on whether or not the time stamp is attached to each packet, and based on whether the attached time stamp is valid or invalid. This structure absorbs the difference in whether or not the time stamp is attached to each packet, and the difference in whether the attached time stamp is valid or invalid, maintaining the quality in playing back the stream. With this structure where the transfer device is placed at a relay point, various types of devices are allowed to be present in mixture in the home network. This promotes to make the network more open.

### <Embodiment 2>

In a device that generates a time stamp from a PLL as in Embodiment 1, if a packet jitter, which has a frequency higher than the control band of the PLL, has entered the transmission path, the PLL cannot remove the packet jitter from the transmission path. The remaining error causes a missing packet in the transmission path. Such a missing packet occurs prominently when packet jitters occur at a shorter interval than a cycle at which PCRs are inserted. In general, in a transmission path such as an IEEE1394 transmission path, each of the transmission side and reception side is provided with a buffer so as to absorb jitters to a certain extent. However, jitter components that occur at a shorter interval than a cycle of PCRs are outside the control band of the PLL circuit for recording, and cannot be restricted. The remaining jitter components not having been restricted may cause a buffer overflow in the aforesaid buffers, which may cause missing of a packet to be transferred. This may result in missing data on the decoder side, which causes an interrupted display of an image or display of a block noise.

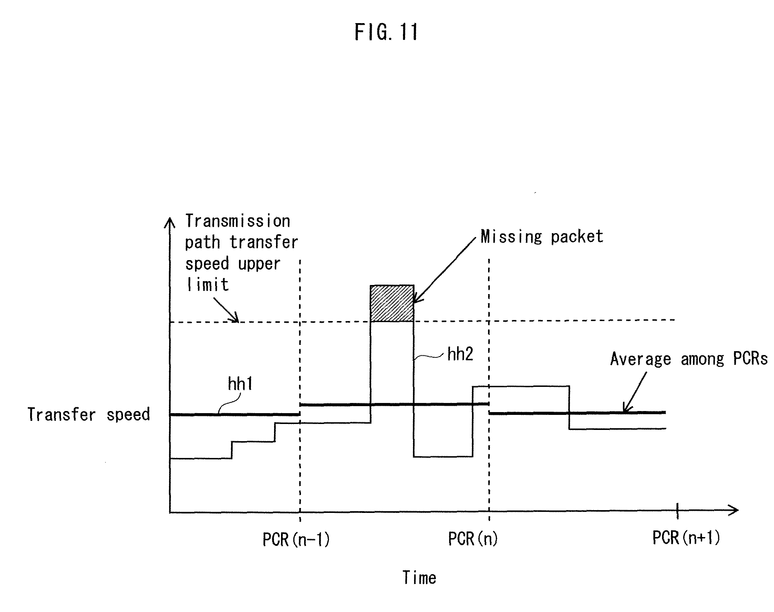

Fig. 11 is a timing diagram visually describing a missing packet. In Fig. 11, the horizontal axis indicates the transport stream transmission time, and the vertical axis indicates the transfer speed of each packet. When the above-described PCR reference transmission is performed, the transfer speed of each PCR group is substantially constant (as indicated by the thick solid line hh1 shown in Fig. 11). On the other hand, when the time stamp attachment transmission is performed, the transfer speed is not constant, and varies even between PCRs (as indicated by the thin solid line hh2 shown in Fig. 11). And when the transfer speed exceeds the transmission path transfer speed upper limit, a missing packet occurs. Such a variation of the transfer speed is caused by an unstable PCR-PLL operation during a recording, by entering of a quantization noise into the transmission path, by a method of making the broadcast wave partial or the like.

To solve the problem of such a missing, the time stamp type judging unit 5 of the present embodiment performs a real-time monitoring in which it monitors in real time whether or not the time interval of each packet exceeds a predetermined value during a packet transmission by the time stamp attachment transmission.

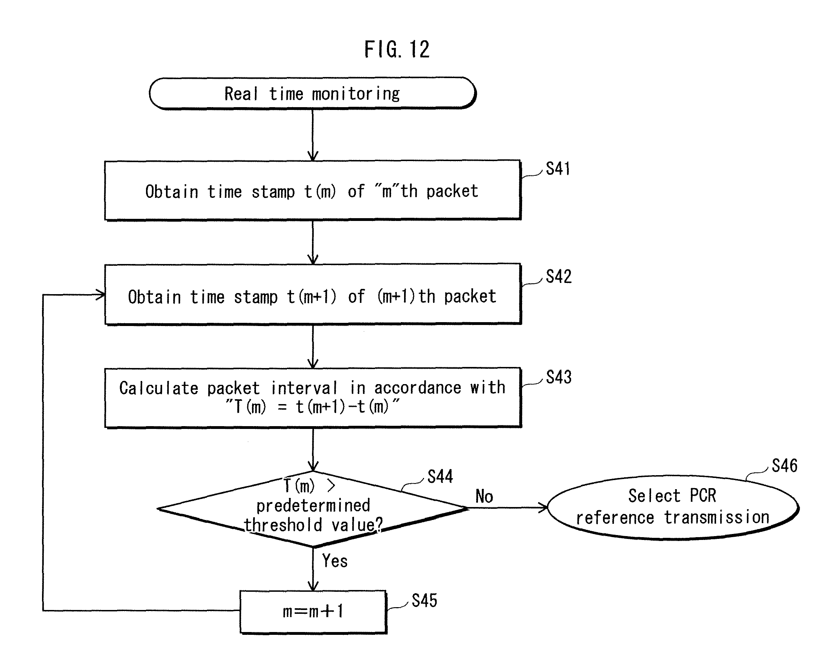

Fig. 12 is a flowchart showing the procedures of the real-time monitoring in Embodiment 2. The flowchart shows that the time stamp type judging unit 5 judges in real time whether the time stamp to be transmitted is valid or invalid, detects an inappropriate packet for performing the time stamp attachment transmission, and changes the transmission method after it detects an inappropriate packet.

First, the time stamp type judging unit 5 obtains a time stamp t(m) of the m^{th} packet (step S41). Next, the time stamp type judging unit 5 obtains a time stamp t(m+1) of the (m+1)^{th} packet (step S42). The time stamp type judging unit 5 then calculates a packet interval T(m) using the obtained values in accordance with "T (m) = t(m+1) -t(m)" (step S43). The time stamp type judging unit 5 judges whether or not the transfer speed has reached the upper limit by judging whether or not the value T(m) is greater than a predetermined threshold value (step S44).

Here, the predetermined threshold value is identical with the maximum transfer speed available with the transmission band on an IEEE1394 interface transmission path. For example, when a setting is made on an IEEE1394 interface such that the maximum transfer speed of 30Mbps is available with the transmission band, the value is used as the upper limit threshold value.
The case where the packet interval T(m) is smaller than the predetermined threshold value is when a packet jitter having a frequency component higher than the PLL control band has entered the IEEE1394 interface transmission path.

When the packet interval T(m) is greater than the predetermined threshold value, the time stamp type judging unit 5 judges that the transfer speed has not reached the upper limit, substitutes "m+1" for "m" (step S45), and calculates the next packet interval. When the packet interval T(m) is not greater than the predetermined threshold value, the time stamp type judging unit 5 judges that the time stamp transmission is not appropriate, and selects the PCR reference transmission (step S46).
According to this flowchart, when the packet interval is equal to or smaller than the threshold value, it is judged that the time stamp transmission is not appropriate, and the PCR reference transmission is selected (step S46). When this selection is made, the transfer speed of the packet of a missing packet is reduced from the level indicated by the thin solid line hh2 of Fig. 11 to the level indicated by the thick solid line hh1 of Fig. 11. This structure prevents a missing packet that is caused by the transfer speed upper limit for the transmission path.

As described above, in the present embodiment, the PCR reference transmission is performed even when it is judged that the time stamp is valid in step S25 or S35 of Figs. 9 and 10. Accordingly, even if, in the example shown in Fig. 11, sparse/dense is detected in the time interval of time stamps, the packets are transmitted by the PCR reference transmission such that the time interval of time stamps is not greater than 500nsec. This prevents occurrence of an overflow or an underflow. It should be noted here that the monitoring procedures shown in Fig. 12 may be performed before the packet transmission, not in real time during the packet transmission.

### <Embodiment 3>

Even in the case where a transport stream with a time stamp is analyzed and a transmission method is selected and performed as described in Embodiment 1, the playback may not be performed correctly due to a factor that exists in the connectiondestination. For example, when the transfer speed upper limit for the transmission path at the transmission destination is lower than an expected value, a missing packet occurs when the time stamp attachment transmission is selected.

Also, there may be a case where, although the PCR reference transmission is selected because an error in the accuracy of an attached time stamp has become slightly larger than an expected error, a stable operation can be obtained in the actuality when the time stamp attachment transmission is selected, because the original bit rate variation of the stream is large.
In such a case, a wrong judgment may be made when only the stream analysis described in Embodiment 1 is performed. The present embodiment proposes a method for dealing with such a case.

That is to say, in Embodiment 1, the bit assignment pattern of the packet is judged by analyzing the actually obtained stream, while in the present embodiment, the information to be used for the judgment is collected preliminarily, and is incorporated into the time stamp type judging unit 5 as a determination table, in the design stage of the transfer device.

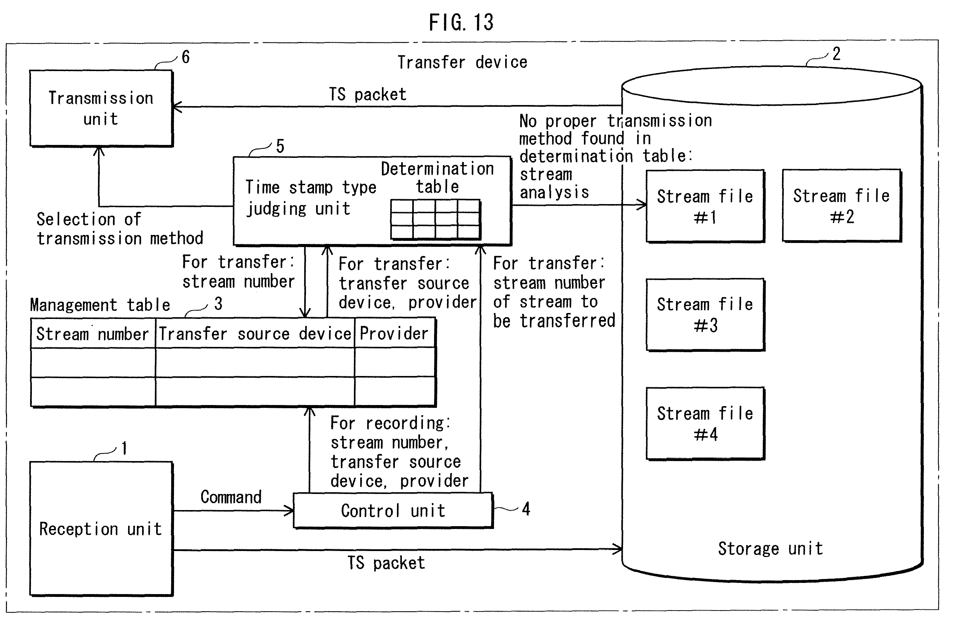

Fig. 13 shows the internal structure of the transfer device in Embodiment 3. As shown in Fig. 13, a management table 3 has been added to the internal structure of the transfer device in Embodiment 1. Further, among the constituent elements described in Embodiment 1, the reception unit 1, the control unit 4, and the time stamp type judging unit 5 have been modified. In the following, constituent elements unique to the present embodiment will be described.

The management table 3 stores, for each of the plurality of files stored in the storage unit 2, a stream number, a transfer source device, a transfer destination device, and a provider, in correspondence with each other. By referring to the management table 3, it is possible to recognize the transfer source devices of each stream, recognize a provider who generated a stream, or the like.
Next, modifications having been added to the reception unit 1, the control unit 4, and the time stamp type judging unit 5 will be described.

The reception unit 1 receives a packet transmitted from the other device, and writes the received packet into the storage unit 2. In this reception of the packet, the reception unit 1 obtains information indicating the transfer source device and the provider of the stream, from the device that transmitted the packet. Here, "the provider of the stream" is a broadcast station that broadcast the stream, a service, a WWW site or the like.
The control unit 4 analyzes a command issued from the other device, and controls the entire transfer device in accordance with the analysis result. When it receives a record command, the control unit 4 generates a new stream number, and in correspondence with the stream number, writes the transfer source device and provider obtained from the issuance source into the management table 3. On the other hand, when it receives a playback command or a dub command, the control unit 4 obtains information indicating the transfer destination device from the command issuance source, and sends information of the stream number of the stream to be transferred and the transfer destination device to the time stamp type judging unit 5.

When it performs a dubbing, the time stamp type judging unit 5 receives the information of the stream number and transfer destination device, and searches the management table 3 for a transfer source device and a provider that correspond to the received stream number. The time stamp type judging unit 5 then determines a bit assignment pattern of the packet from the detected stream number, transfer destination device, and transfer source device, and causes the transmission unit 6 to perform a transmission by a transmission method that corresponds to the determined bit assignment pattern. As described up to now, the time stamp type judging unit 5 determines a time stamp format based on a transfer destination device, transfer source device, and provider, instead of performing the stream analysis. In the present embodiment, when a proper transfer destination device, transfer source device, and provider cannot be detected in the determination table, the time stamp type judging unit 5 performs the stream analysis described in Embodiment 1.

A transfer destination device and a transfer source device can be identified by referring to the configuration ROM of the issuance source device, when a command is issued. The configuration ROM is an internal ROM defined on an IEEE1394 interface, and stores information unique to the device. Accordingly, when a command is issued, the performance of the device, the business company identifier or the like can be read out from the configuration ROM.

It is also possible to identify a provider by referring to the SIT in the transport stream and recognizing the broadcast station and the broadcast channel. Alternatively, to achieve the same, these information may be notified by a command that is newly and separately defined, or these information may be embedded into a stream.

### <Internal Structure of Transmission Unit 6>

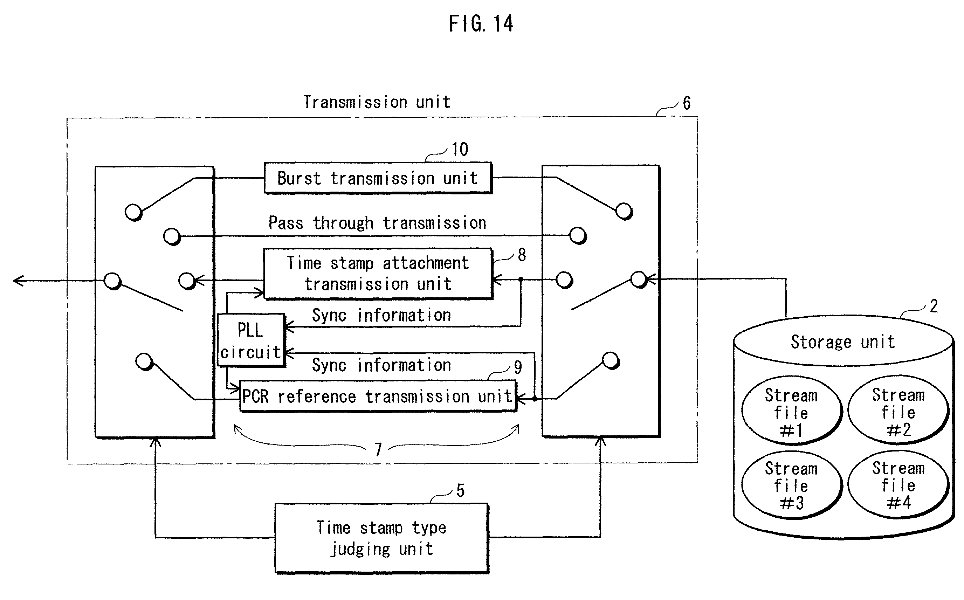

Fig. 14 shows the internal structure of the transmission unit 6 in Embodiment 3. As shown in Fig. 14, the transmission unit 6 includes a burst transmission unit 10 and a path for a pass through transmission, as well as the time stamp attachment transmission unit 8 and the PCR reference transmission unit 9 shown in Embodiment 1. The switch 7 switches among transmissions by the time stamp attachment transmission unit 8, the PCR reference transmission unit 9, and the burst transmission unit 10 and pass through transmissions. The following will describe the burst transmission unit 10 and the pass through transmission.

### <Burst Transmission Unit 10>

The burst transmission unit 10 performs a burst transmission. In the burst transmission, a transport stream is transmitted at a substantially constant transfer speed to an IEEE1394 interface so that it can be received by another AV-HDD. That is to say, in the burst transmission, transmission of packets constituting the stream is not based on the reception time axis. When a stream received by the DTV/STB is to be transmitted, the isochronism of the stream is based on the reception time axis. In contrast, in the burst transmission, packets are transmitted regardless of the reception time axis. With the burst transmission, it is possible to transmits packets to the destination device at high speeds. Since, as described above, the burst transmission totally disregards the isochronism on the reception time axis, the time stamps attached to the packets cannot be used as the means for restoring the isochronism, at the time of the reception of the packets. In the case of the N times speed transmission described in "The Problems the Invention Is Going to Solve", in, for example, a transport stream encoded at a variable bit rate, "N times" is specified so that the maximum bit rate does not exceed the upper limit of the transmission path band. On the other hand, the burst transmission unit 10 performs a burst transmission in which a transport stream is transmitted at a substantially constant transfer speed. This enables the transmission path band to be utilized to its full extent, resulting in reduction of the processing time for the high-speed dubbing.

When the above-described high-speed transfer operation is performed, two types of time stamps exist in the home network: (1) time stamps with which the isochronism can be assured for the playback of video/audio; and (2) time stamps with which the isochronism cannot be assured.
Up to now, the burst transmission has been explained.

### <Pass through Transmission >

The pass through transmission means to transmit packets attached with time stamps stored in the storage unit 2 to the other device as they are.

Since four transmission methods are available as described above, it is possible, at any of the transfer source device, transfer destination device, and provider, to select one from among the four transmission methods.
When one is selected from among the four transmission methods, the time stamp type judging unit 5 in the present embodiment uses the "determination table" as a determination material. Here, the determination table associates each of the transmission methods uniquely with a different combination of the transfer source device, transfer destination device, and provider. More specifically, in the case where a transport stream, which is supplied by a provider indicated by the determination table, is input from a device indicated by the transfer source device information, and then transferred to a device indicated by the transfer destination device information, the determination table indicates which one among a plurality of transmission methods should be selected.

In the following, the recitation in the determination table and the transfer between devices will be described.

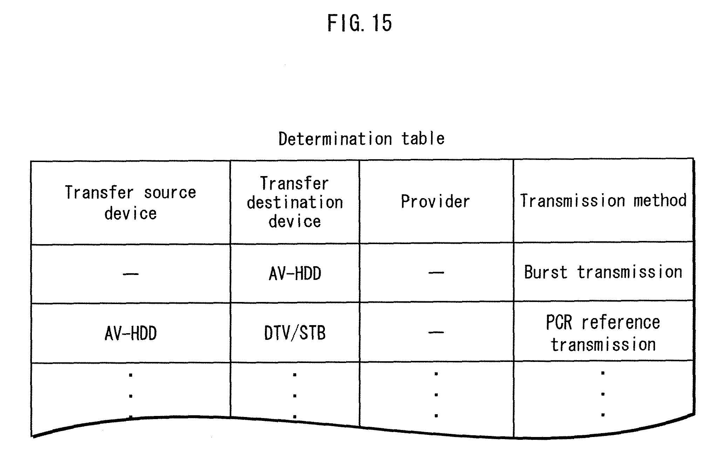

Fig. 15 shows an example of the determination table in the cases where (1) anAV-HDD is specified as the transfer destination device, and (2) an AV-HDD is specified as the transfer source device and a DTV/STB is specified as the transfer destination device. The sign "-" in Fig. 15 indicates an arbitrary device. Here, it is found from Fig. 15 that a combination of "transfer source device = arbitrary device" and "transfer destination device = AV-HDD" is associated with the burst transmission. It is also found from Fig. 15 that a combination of "transfer source device = AV-HDD" and "transfer destination device = DTV/STB" is associated with the PCR reference transmission. The reason why "transfer destination device = AV-HDD" is associated with the burst transmission is that, when the destination device is an AV-HDD, there is no need to assure the isochronism since the destination device can perform the PCR reference transmission. For this reason, an arrangement is made that, when the transfer destination device is an AV-HDD, the burst transmission is selected. On the other hand, when an AV-HDD is the transfer source device and a DTV/STB is the transfer destination device, the transmission method is set to the PCR reference transmission. This is because, when the transfer source device is an AV-HDD, it is considered that the time stamp is invalid, and the PCR reference transmission should be selected.

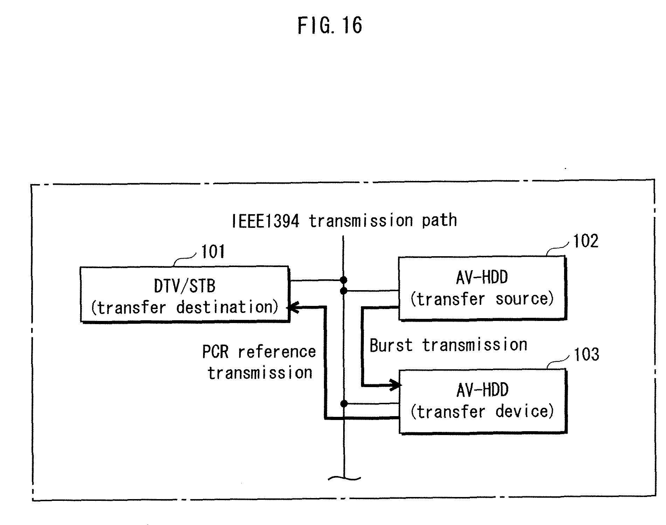

Fig. 16 shows a transfer performed on the home network when the determination table is described as shown in Fig. 15. Fig. 16 has been drawn by adding arrows, which indicate transfers between devices, to a part of the internal structure of the home network shown in Fig. 1. As shown in Fig. 15, a combination in which the transfer destination device is an AV-HDD is associated with the burst transmission. It can therefore be known that the transfer between the AV-HDD 102 and the AV-HDD 103 is performed by the burst transmission. Further, a combination of "transfer source device=AV-HDD" and "transfer destination device = DTV/STB" is associated with the PCR reference transmission. It can therefore be known that the transfer between the AV-HDD 103 and the DTV/STB 101 is performed by the PCR reference transmission.

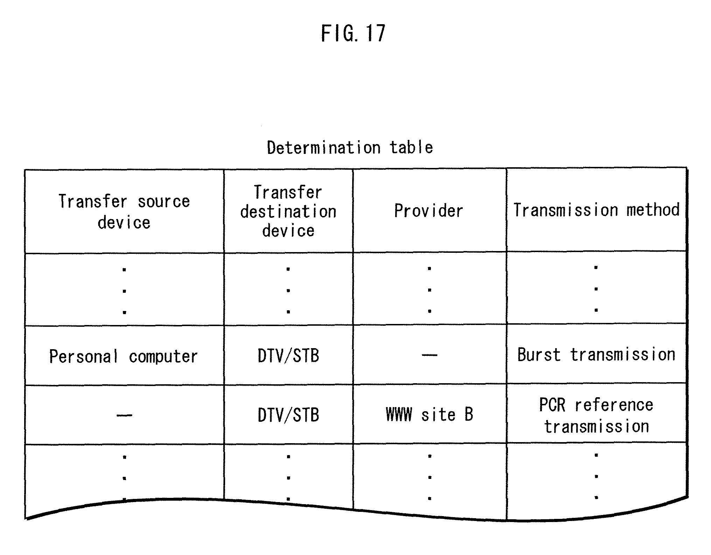

Fig. 17 shows an example of the determination table in the cases where (1) a personal computer is specified as the transfer source device, and (2) a WWW site is specified as the provider. The sign "-" in Fig. 17 indicates an arbitrary device. Here, it is found from Fig. 17 that a combination of "transfer source device = personal computer" and "transfer destination device = DTV/STB" is associated with the burst transmission. It is also found from Fig. 17 that a combination of "transfer source device = arbitrary device", "transfer destination device = DTV/STB", and "provider = WWW site" is associated with the PCR reference transmission. The reason why the determination table is recited in this way is that a stream obtained by the pass through transmission or obtained from the WWW site B should be judged as not containing a time stamp or as its time stamp is invalid, and that when the transfer destination device is a DTV/STB, the transmission interval should be adjusted.

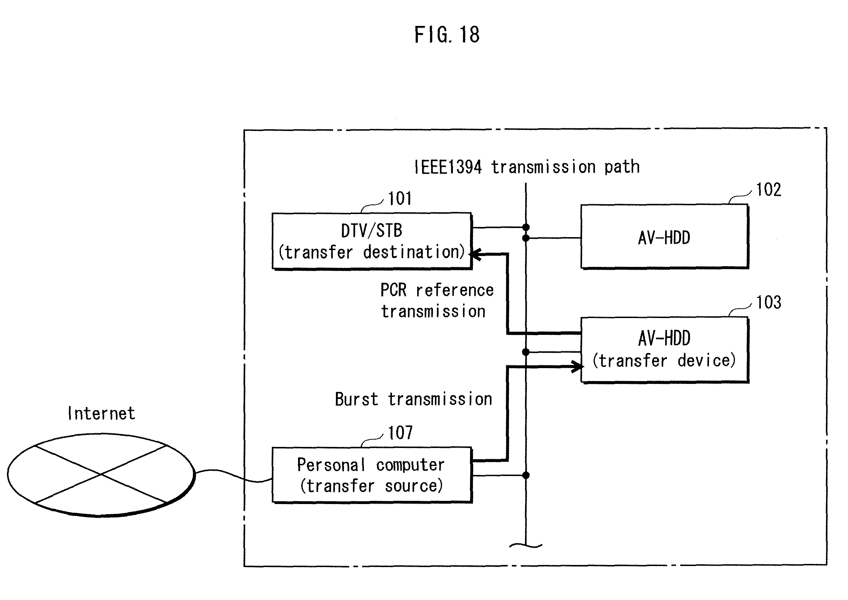

Fig. 18 shows a transfer performed on the home network when the determination table is described as shown in Fig. 17. Fig. 18 has been drawn by adding arrows , which indicate transfers between devices, to a part of the internal structure of the home network shown in Fig. 1. As shown in Fig. 17, a combination in which the transfer source device is a personal computer and the transfer destination device is a DTV/STB is associated with the PCR reference transmission. It can therefore be known that the transfer between the AV-HDD 103 and the DTV/STB 101 is performed by the PCR reference transmission. A combination in which the provider is a WWW site and the transfer destination device is a DTV/STB is associated with the burst transmission. It can therefore be known that the transfer between the personal computer 107 AV-HDD 103 and the AV-HDD 103 is performed by the burst transmission.

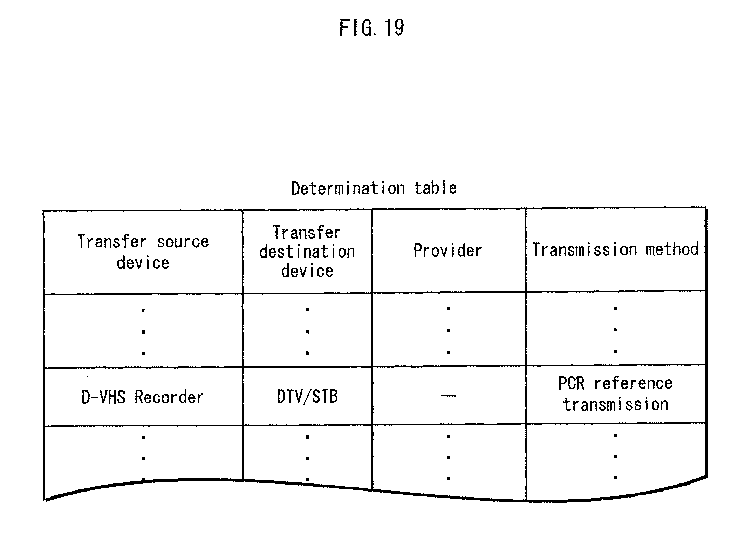

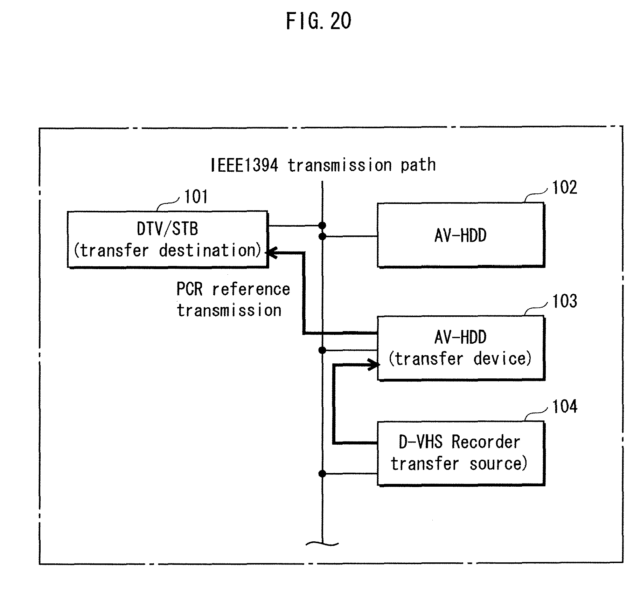

Fig. 19 shows an example of the determination table in the case where a D-VHS tape recorder is specified as the transfer source device. Here, it is found from Fig. 19 that a combination of "transfer source device = D-VHS tape recorder" and "transfer destination device = DTV/STB" is associated with the PCR reference transmission. Fig. 20 shows a transfer performed on the home network when the determination table is described as shown in Fig. 19. Fig. 20 has been drawn by adding arrows, which indicate transfers between devices, to a part of the internal structure of the home network shown in Fig. 1. As shown in Fig. 19, a combination in which the transfer source device is a D-VHS tape recorder and the transfer destination device is a DTV/STB is associated with the PCR reference transmission. It can therefore be known that the transfer between the AV-HDD 103 and the DTV/STB 101 is performed by the PCR reference transmission.

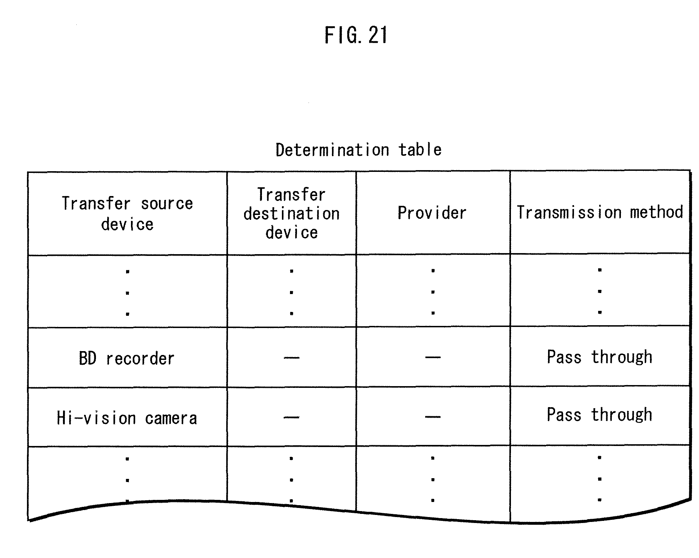

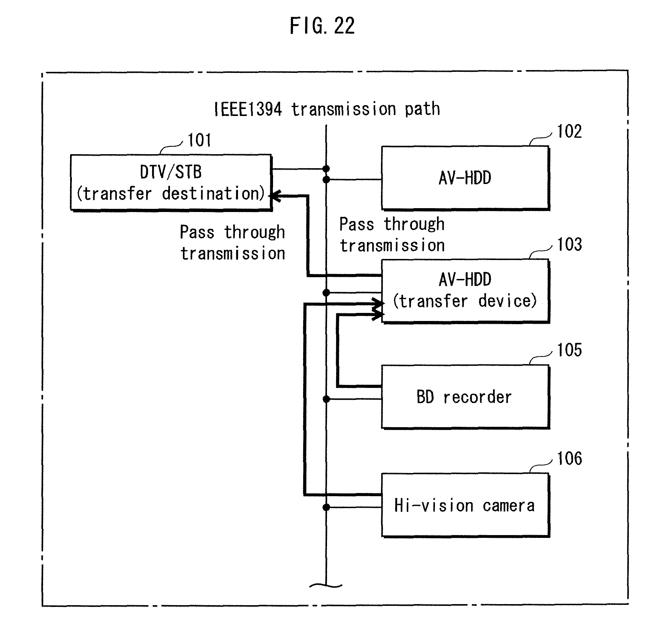

Fig. 21 shows an example of the determination table in the case where (1) a BD recorder is specified as the transfer source device, and (2) a hi-vision camera is specified as the transfer source device. Here, it is found from Fig. 21 that a combination of "transfer source device = BD recorder or hi-vision camera" and "transfer destination device = DTV/STB" is associated with the pass through transmission. This recitation is based on the following reason. That is to say, the BD recorder or hi-vision camera is defined in the application layer standard of the recording medium that the packets should be recorded with time stamps attached thereto. Accordingly, it should be judged that each packet is attached with a valid time stamp. Thus, the determination table is recited in this way so that the pass through transmission is automatically selected in correspondence with the judgment result. Fig. 22 shows a transfer performed on the home network when the determination table is described as shown in Fig. 21. Fig. 22 has been drawn by adding arrows, which indicate transfers between devices, to a part of the internal structure of the home network shown in Fig. 1. As shown in Fig. 21, a combination in which the transfer source device is a hi-vision camera and the transfer destination device is a DTV/STB is associated with the pass through transmission. It can therefore be known that the transfer between the AV-HDD 103 and the DTV/STB 101 is performed by the pass through transmission.

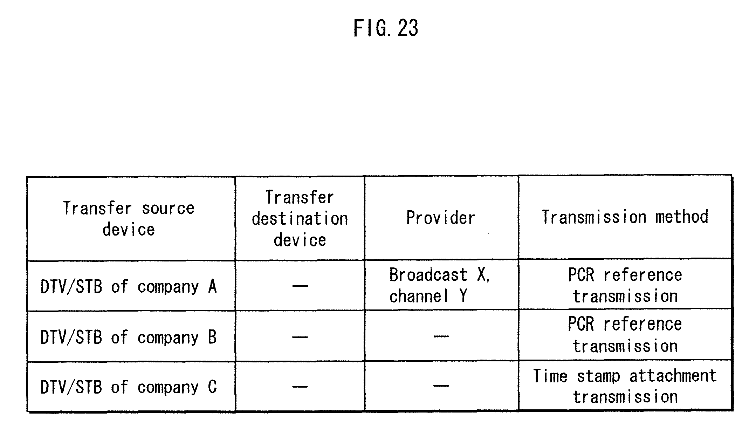

Fig. 23 shows an example of the determination table in which device makers are defined in detail. This example differs from the above-described examples of the determination table in that it defines makers of devices, as well as types of devices.
In the determination table shown in Fig. 23, DTV/STBs manufactured by companies A, B, and C are indicated as the transfer source devices, respectively. The table further defines that, when the DTV/STB manufactured by company A is the transfer source device and the provider is channel Y of broadcast X, the PCR reference transmission should be selected as the transmission method.

The channel Y of broadcast X is characterized in that the bit rate of the transport stream varies greatly due to some problem in the equipment of the broadcast station. Further, the DTV/STBs manufactured by companies A and B are characterized in that they transmit such a bit rate variation as it is to IEEE1394 interfaces. In view of these characteristics, the determination table shown in Fig. 23 defines that, when such a device is the transfer source device, the PCR reference transmission should be selected.

In contrast to this, the DTV/STB manufactured by company C is characterized in that it absorbs the problem in the equipment of the broadcast station and restricts the bit rate variation. In view of this characteristic, the determination table shown in Fig. 23 defines that, when such a device is the transfer source device, the time stamp attachment transmission should be selected.
With regards to those that do not match any determination indicated by these preliminary information, a transmission method is selected in accordance with the result of the stream analysis performed by the time stamp type judging unit 5, as explained in Embodiment 1.

With the above-described structure, it is possible to solve problems that cannot be solved only by the determination based on the stream analysis performed by the time stamp type judging unit 5, and to achieve transmissions (playbacks) at appropriate standard speeds.
Further,with the above-described structure,when a transfer, in which the transfer device is used as a relay point, is performed, the transfer device can select an appropriate transmission method based on the combinations of the transfer source device, transfer destination device, and provider defined in the determination table.

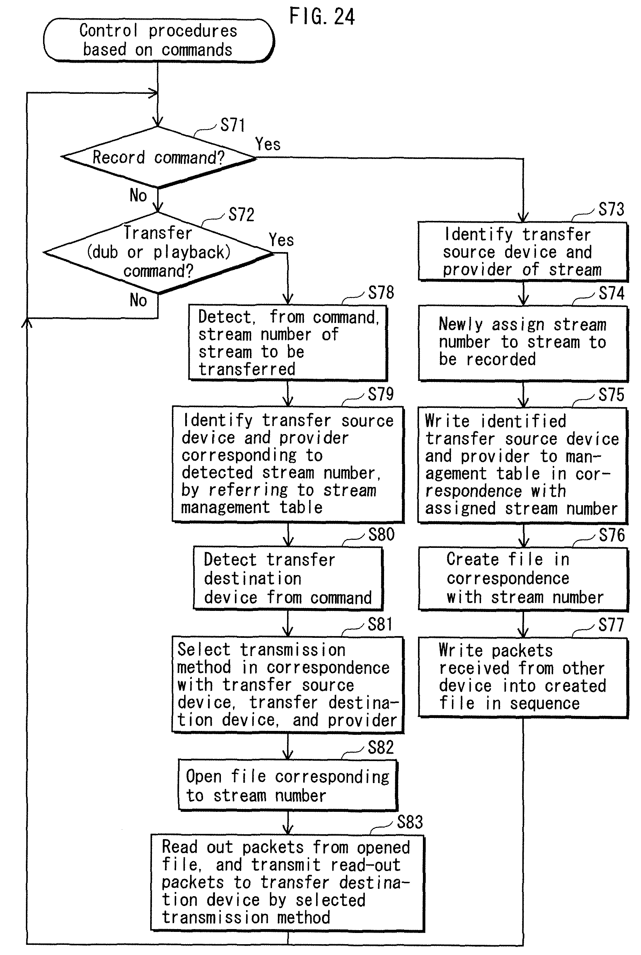

Fig. 24 is a flowchart showing the processing procedures of the control unit 4 in Embodiment 3. The steps S71 and S72 constitute a command wait loop to wait for a command issued from the other device. When a record command is issued, it is judged as "Yes" in step S71, and steps S73 through S77 are performed. That is to say, the control unit 4 identifies the transfer source device and the provider (step S73), newly assigns a stream number to the stream to be recorded (step S74), writes the identified transfer source device and provider to the management table 3 in correspondence with the assigned stream number (step S75), creates a file in correspondence with the stream number (step S76), and writes packets received from the other device into the created file in sequence (step S77). After performing these steps, the control unit 4 returns to the command wait loop composed of steps S71 and S72.

When a transfer command such as a dub command or a playback command is issued, steps S78 through S83 are performed. That is to say, the control unit 4 detects, from the command, a stream number of the stream to be transferred (step S78), identifies the transfer source device and provider corresponding to the detected stream number, by referring to the management table 3 (step S79), detects the transfer destination device from the command (step S80), causes the time stamp type judging unit 5 to selects a transmission method in correspondence with the combination of the transfer source device, transfer destination device, and provider (step S81), opens a file corresponding to the stream number (step S82), reads out packets from the opened file, and transmits the read-out packets to the transfer destination device by the selected transmission method (step S83). After performing these steps, the control unit 4 returns to the command wait loop composed of steps S71 and S72. With this structure, it is possible to solve problems that cannot be solved only by the analysis of the transport streams attached with time stamps, and to select an appropriate transmission means.

As described above, according to the present embodiment, in the case where a transferred stream may not be played back correctly due to some factor of the transfer destination device, or in the case where an error in the accuracy of the time stamp obtained from the transfer source device may become slightly larger than an expected error, it is possible to cause the transfer device to perform the packet transmission by an appropriate transmission method by obtaining preliminarily the information of the transfer source device and the transfer destination device in the design stage of the transfer device and incorporating the information into a determination table, and causing the time stamp type judging unit 5 to refer to the determination table that indicates transmission methods corresponding to combinations of the transfer source device and the transfer destination device. With such a structure, it is possible to cover a case where only the stream analysis described in Embodiment 1 is not sufficient to make an appropriate judgment.

### <Embodiment 4>

The present embodiment relates to an improvement to a case where components of a stream are originally transmitted at such intervals that produce a unique sparse/dense pattern in the transmission of the components. The sparse/dense pattern is produced when transport streams for a plurality of services are multiplexed into one transport stream. More specifically, in broadcasting, TS packets of transport streams belonging to a plurality of services are multiplexed into one. Observed due to this is a phenomenon where during a period, a transponder receives a block of TS packets of a transport stream which belong to a specific service, and during another period, the transponder receives a block of TS packets of a transport stream which belong to another specific service.

When the PCR reference transmission is a transport stream which produces such a phenomenon, the PTS and DTS are deviated. The PTS (Presentation Time Stamp) is time control information for audio output, and is attached to each of the I, P, and B pictures. The DTS (Decoding Time Stamp) is a time stamp indicating a decoding start time, and is attached to each of the I and P pictures. The PTS and DTS are arranged based on the buffer model of the transport stream decoder. When the time position is not appropriate, an overflow or underflow occurs to the buffer of the transport stream decoder. The PCR reference transmission described above is apt to cause a deviation in the transmission timing.

In the case where the PCR reference transmission is applied evenly to a transport stream, a seamless playback is not assured when the buffer size of the transfer destination device is close to a threshold limit value defined in the MPEG standard for the virtual decoder model. The possibility of this happening is actually low since the buffer size is generally designed with a large allowance. However, in the future, there may be a case where the buffer size is designed to be close to a threshold limit value due to an appearance of a decoder whose cost is as low as possible. In such a case, an inappropriate playback is caused when only the PCR reference transmission is used.

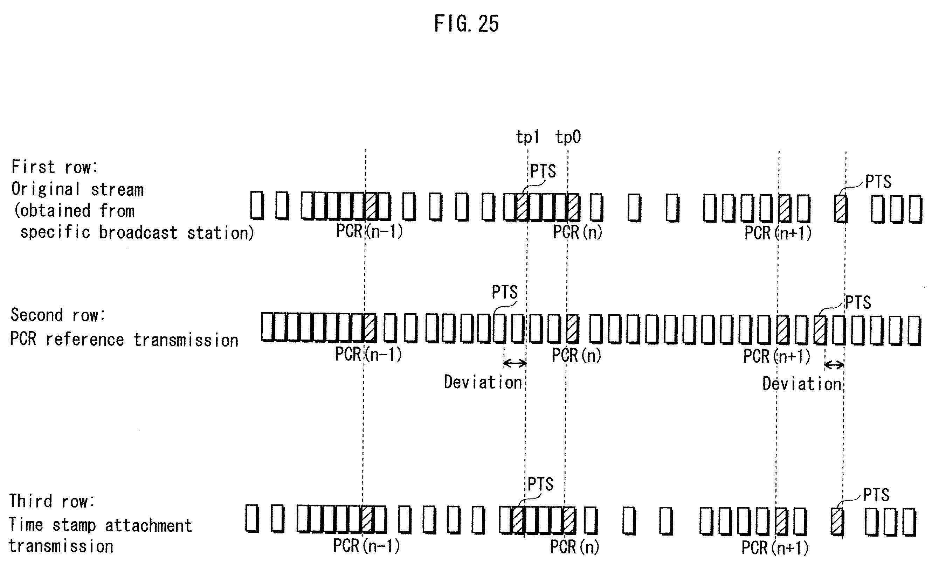

Fig. 25 is a timing diagram provided to explain a case where the transmission timing of packets, to which PTSs are attached, is deviated since the PCR reference transmission is performed.

The first row of Fig. 25 indicates the arrangement in the original stream in real time. The first row shows a stream that has a sparse/density pattern in the time axis direction. The stream having a sparse/density pattern is a stream that has a variation in the transfer speed, and is generated by a partialization. The partialization is a process for extracting one or more programs from a program in which a plurality of programs have been multiplexed for a transponder in a digital broadcast. When this partialization is performed, the interval between packets arranged between PCRs varies to produce a sparse/density pattern. When the playback is performed by the PCR reference transmission, the packets are arranged in real time as shown in the third row of Fig. 25. As understood from Fig. 25, each packet containing PTS or DTS is transmitted to position tp1 that is deviated from position tp0 that is the proper position. Such a deviation ruins the buffer model of the transport stream decoder, and causes an overflow or underflow of the buffer.

In view of this problem, in the present embodiment, the determination table incorporated in the time stamp type judging unit 5 has the following structure. That is to say, based on the fact that each broadcast station and channel uses different equipment, preliminarily identified are specific broadcast stations and channels that cause a partial bit rate variation when a plurality of programs are multiplexed into a transport stream, and such specific broadcast stations and channels are written into the determination table as providers, and the time stamp attachment transmission or the PCR reference transmission is associated with each provider in the determination table.

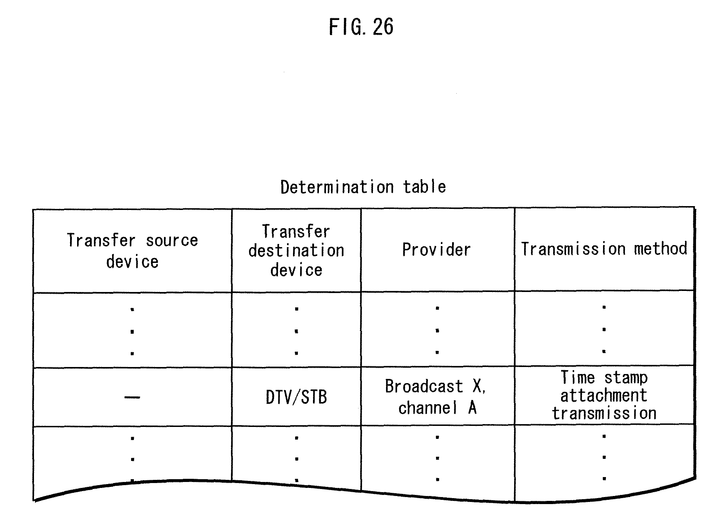

Fig. 26 shows an example of the determination table in Embodiment 4.
For example, when channel A of broadcast station X causes a partial bit rate variation as described above, the channel A of broadcast station X is written into the determination table as the provider of the stream, and the channel is associated with the time stamp attachment transmission. With this arrangement, when the provider is the channel, the time stamp attachment transmission is inevitably selected.

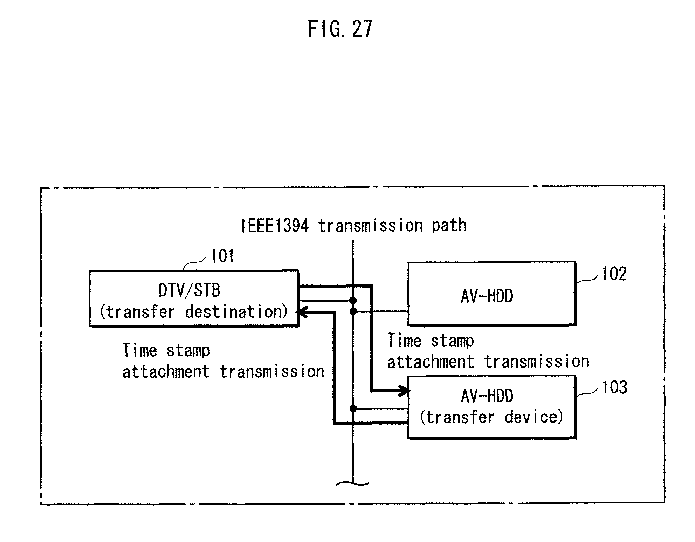

Fig. 27 shows a transfer performed on the home network when the determination table is described as shown in Fig. 26. Fig. 2 7 has been drawn by adding arrows, which indicate transfers between devices, to a part of the internal structure of the home network shown in Fig. 1. As shown in Fig. 26, a combination in which both the transfer source device and the transfer destination device are DTV/STBs is associated with the PCR reference transmission. It can therefore be known that the transfer of TS packets from the AV-HDD 103 to the DTV/STB 101 is performed by the time stamp attachment transmission.

The third row of Fig. 25 shows a plurality of packets transmitted by the selected time stamp attachment transmission. Since the time stamp attachment transmission is selected, each packet is transmitted to the transfer destination device while the original isochronism between packets is maintained.

### <Embodiment 5>

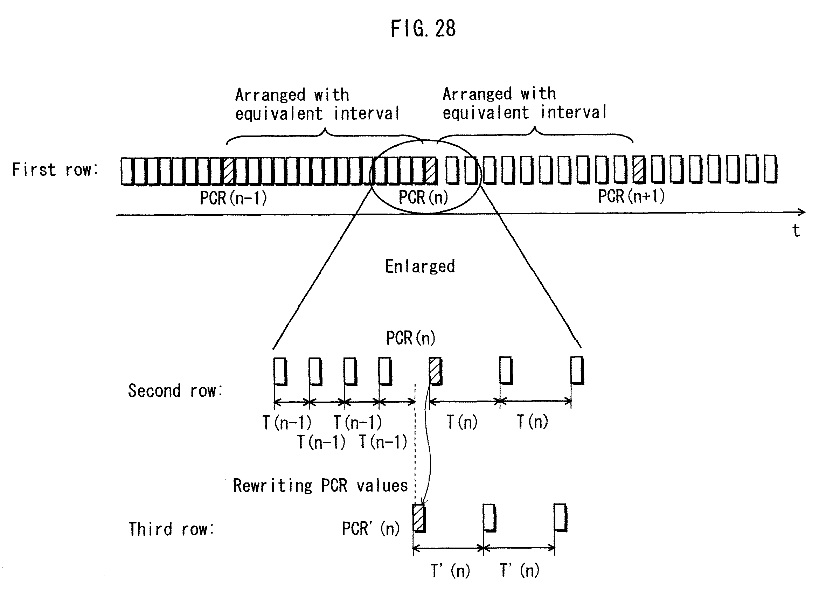

The present embodiment relates to an improvement to the PCR reference transmission. More specifically, the present embodiment relates to an improvement to the lengthy extension of the interval in the PCR reference transmission. Fig. 28 shows a specific example of the lengthy extension of the interval between PCR packets, which occurs in the PCR reference transmission. The first row of Fig. 28 shows a packet sequence on the real playback time axis transmitted by the PCR reference transmission.

In the PCR reference transmission, the timing at which PCR packets are transmitted is controlled using the STC counter, and the packets between the PCR packets are transmitted at a constant transfer speed. In Fig. 28, since the packets are transmitted at a constant transfer speed, the time interval between PCR(n-1) and PCR (n) is represented as T(n-1), and the time interval between PCR(n) and PCR (n+1) is represented as T(n). To make the transfer speed between PCRs constant, as shown in the second row of Fig. 28 in enlargement, the PCR packet (n) is not transmitted even after the time interval T(n-1) passes since the transmission of the preceding packet, but is transmitted after further a while. That is to say, a lengthy extension of the transmission interval is caused before the PCR packet (n) is transmitted. In one conventional technology, for example, to pad the lengthily extended section, and to keep the transfer speed between PCR packets constant, null packets intended for padding of transport streams are inserted.

In the present embodiment, the values of the PCR packets themselves are rewritten to indicate the correct real times, not performing the PCR packet transmission using the STC counter as in a conventional technology. The third row of Fig. 28 shows positions of PCR packets after rewriting the values of the PCR packets, and the packet interval modified accordingly. The position of PCR' packet (n) after the rewriting is exactly a position after time interval T (n-1) passes since the transmission of the preceding packet. Also, the packet interval between the position of PCR packet (n) and the position of PCR packet (n+1) has been modified to T'(n).

In the following, the internal structure of the PCR reference transmission unit 9 for achieving the above-described rewriting will be described.

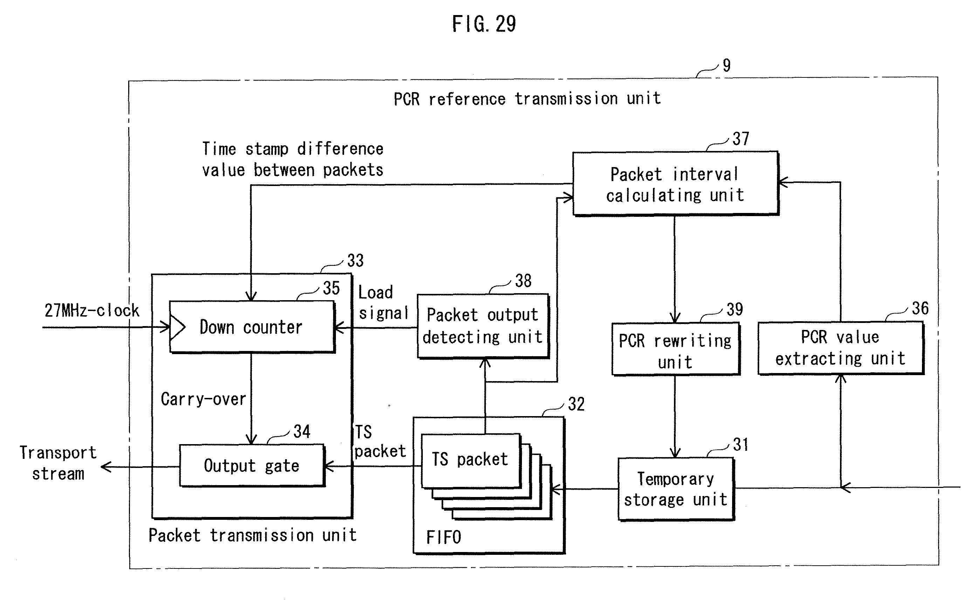

Fig. 29 shows the internal structure of the PCR reference transmission unit 9 in Embodiment 5. In the present embodiment, a PCR rewriting unit 39 has been newly added. Further, the PCR value extracting unit 36 and the packet interval calculating unit 37 described in Embodiment 3 have been modified. In the following, the newly added constituent element and the modified constituent elements will be described.

In the present embodiment, when a transport stream with a time stamp is obtained, the PCR value extracting unit 36 detects positions where PCR packets are stored, and manages the detected positions as management information. And when reading out from the storage unit 2, the PCR value extracting unit 36 extracts the PCR packets by referring to the storage positions indicated by the management information. With this structure in which the management information indicating the storage positions is generated, it is possible to retrieve all PCRs easily. This enables even a microprocessor with a low processing capability to achieve the present embodiment.

In the present embodiment, the packet interval calculating unit 37 obtains a PCRpacket interval T (n-1) from PCR values written in PCR(n-1) and PCR(n) in accordance with "T(n-1) = Time{PCR(n)}-Time{PCR(n-1)}", and calculates a time stamp difference value (= T(n)÷M). The packet interval calculating unit 37 then sets the calculated time stamp difference value in the down counter 35 as an initial value. In doing this, the packet interval calculating unit 37 corrects the PCR value of the n^{th} PCR using the remainder α of the division. More specifically, the packet interval calculating unit 37 obtains a value by subtracting the remainder α from the PCR value of the n^{th} PCR, and notifies the PCR to be rewritten to the PCR rewriting unit 39.

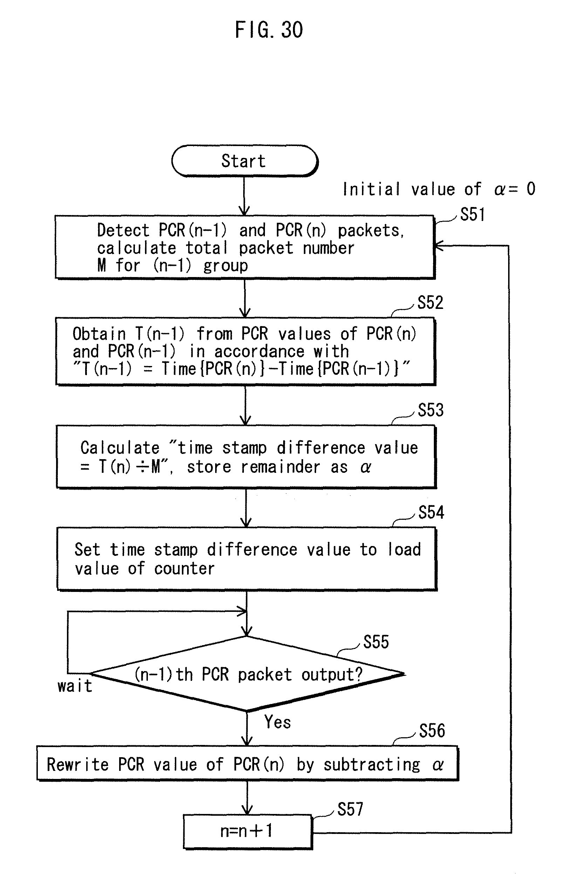

The PCR rewriting unit 39 rewrites the PCR value of the notified PCR among PCRs stored in the temporary storage unit 31.
The PCR rewriting unit 39 having the above-described structure can be implemented in the transfer device by describing theprocessingprocedures shown in Fig. 30 in a computer description language, and causing the CPU to execute the description.
Fig. 30 is a flowchart showing the procedures of the transfer device in Embodiment 5.

The transfer device in Embodiment 5 detects PCR(n-1) and PCR(n) packets, and calculate the total number of packets in the (n-1) PCR group, where the total number of packets is represented as "M" (step S51). The transfer device then obtains a PCR packet interval T(n-1) from PCR values written in PCR(n-1) and PCR(n) in accordance with "T(n-1) = Time{PCR(n)}-Time{PCR(n-1)}" (step S52). The transfer device then calculates a time stamp difference value (= T(n)÷M) and obtains the remainder α (step S53). The transfer device then sets the calculated time stamp difference value in the down counter 35 as an initial value (step S54).

Here, when the PCR of the (n-1)^{th} group is the first packet to be output, an initial value obtained from the above-described calculation is loaded into the down counter 35 immediately before the PCR(n-1) packet is transmitted. After this, the transfer device waits until the output of the PCR(n-1) is detected (step S55). After the output is detected, the packet interval calculating unit 37 obtains a value by subtracting the remainder α from the PCR value of the n^{th} PCR, and notifies the PCR to be rewritten to the PCR rewriting unit 39. The PCR rewriting unit 39 rewrites the PCR value of the notified PCR among PCRs stored in the temporary storage unit 31 (step S56).

The transfer device then increments "n" (step S57), and returns to step S51 to perform the same process onto the next PCR packet.
From the second round of the process shown in Fig. 30 and onwards, PCR packet interval T'(n) is obtained from PCR(n) that has not been rewritten to PCR(n-1) after the PCR value has been rewritten. This interval is slightly longer than T(n), as shown in the lower part of Fig. 28.

With the above-described structure and procedures, it is possible to assure that the PCR reference transmission unit 9 well satisfies the allowance (±500nsec) for the error of PCR packet transmission time defined in the MPEG standard.

### <Embodiment 6>

The present embodiment relates to an improvement that the real time transmission is not performed in the transmission stage. The present embodiment differs from the previous embodiments in that the transmission signal is not a transport stream that is transmitted in real time, but is a stream having been subjected to a format conversion. In the format conversion, the type of a time stamp, which is attached to a transport stream obtained via the Internet or the like, is determined, and then a time stamp is re-attached.

The previous embodiments describe of an AV-HDD that plays a role of a relay point when a stream is transferred. However, in the present embodiment, the AV-HDD embeds in itself a drive device for driving a recording medium of a random access type, such as the blu-ray disc, and the drive device may be a transmission destination of a transport stream. The afore-said re-attachment of a time stamp is performed when a packet is transmitted to the drive device.

### <Internal Structure of Transfer Device>

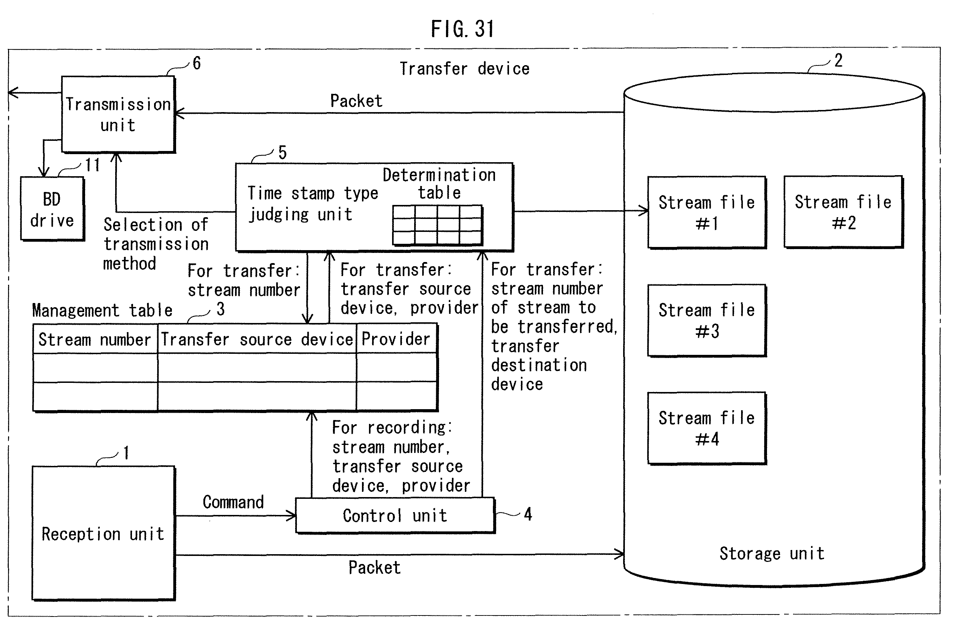

Fig. 31 shows the internal structure of the transfer device in Embodiment 6. As shown in Fig. 31, the transfer device of the present embodiment includes a BD drive 11, and packets transmitted from the transmission unit 6 are output to the BD drive 11.

### <Internal Structure of Transmission Unit 6>

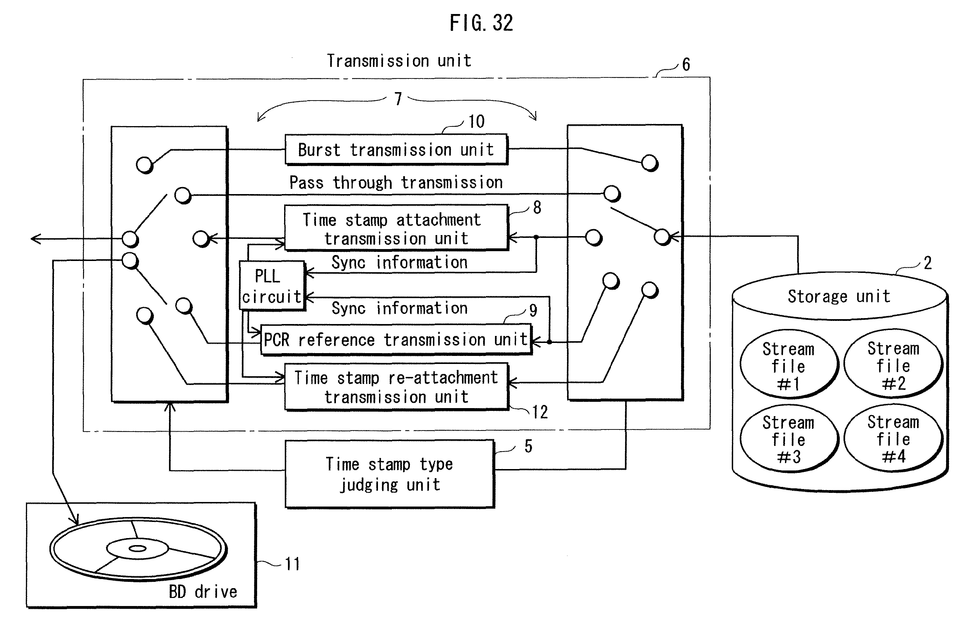

Fig. 32 shows the internal structure of the transmission unit 6 in Embodiment 6. As shown in Fig. 32, the transmission unit 6 includes a time stamp re-attachment transmission unit 12, as well as the time stamp attachment transmission unit 8, the PCR reference transmission unit 9, and the burst transmission unit 10 described in Embodiment 3. The switch 7 switches among transmissions by the time stamp attachment transmission unit 8, the PCR reference transmission unit 9, the burst transmission unit 10, and the time stamp re-attachment transmission unit 12 and pass through transmissions. The following will describe the time stamp re-attachment transmission unit 12.

The time stamp re-attachment transmission unit 12 deletes, in sequence, times stamps attached to all the packets in accordance with the judgment result of the time stamp type judging unit 5, and newly attaches predetermined time stamps. More specifically, the predetermined time stamps are time stamps defined in the standard of the blu-ray disc.
The following improvement is added to the time stamp type judging unit 5, among the constituent elements described in Embodiment 1.

The time stamp type judging unit 5 selects an appropriate attachment method, and outputs a transport stream 109 that is attached with a time stamp after format conversion.

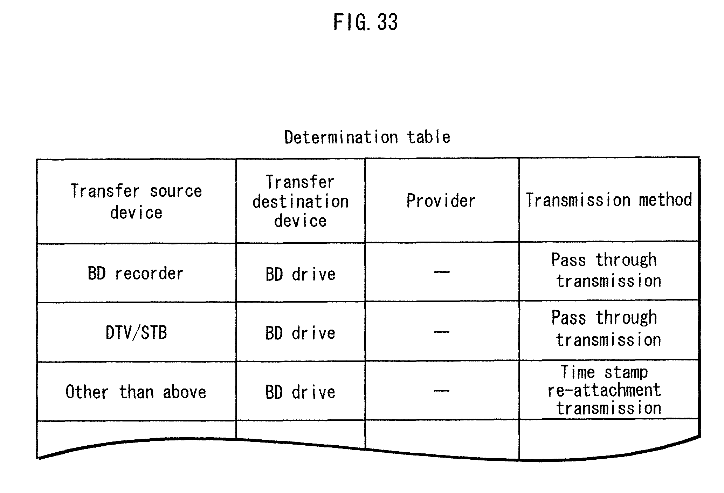

Fig. 33 shows an example of the determination table in Embodiment 6. As shown in Fig. 33, a combination of "transfer destination device = BD drive" and "transfer source device = BD recorder" is associated with the pass through transmission method.

Also, a combination of and "transfer source device = DTV/STB" "transfer destination device = BD drive" is associated with the pass through transmission method. The determination table further defines that when the transfer source device is other than these, the time stamp re-attachment transmission method should be selected.
With this structure, when the transfer source device is other than BD recorder and DTV/STB, the time stamp re-attachment transmission method is automatically selected.

According to the present embodiment, it is possible to generate and attach an appropriate time stamp to a transport stream when the transport stream is to be recorded on a recording medium, such as a blu-ray disc drive, on which transport streams with a predetermined time stamp should be recorded. For example, when a transport stream obtained via a network is not attached with a time stamp, or an attached time stamp is invalid, the format conversion is performed by the time stamp re-attachment transmission unit 12. Such a structure of the present embodiment enables more devices to play back and display.

### <Embodiment 7>

In Embodiment 1, the transfer device placed at a relay point on a transfer path judges whether a packet to be transferred is valid or invalid, while in the present embodiment, a device (playback device), such as a DTV/STB, that can perform a playback process judges whether a packet being transferred over a transmission path is valid or invalid. Further, the playback device in the home network, such as a DTV/STB, executes the procedures shown in Embodiment 1. With this structure, when a packet attached with an invalid time stamp is being transferred, the playback device in the home network does not perform the playback process. This preliminarily prevents an erroneous playback of an image which might occur when a packet that cannot be synchronized with the PLL circuit is taken in and attempted to be played back.

More specifically, the playback device such as a DTV/STB includes the reception unit 1 and the time stamp type judging unit 5 described in Embodiment 1. The time stamp type judging unit 5 refers to a time stamp attached to a packet being transmitted over a transmission path, and judges whether the time stamp is valid or invalid. When the time stamp is valid, the time stamp type judging unit 5 outputs a status signal indicating a playback available to the control unit of the playback device. When the time stamp is invalid, the time stamp type judging unit 5 outputs a status signal indicating a playback unavailable to the control unit of the playback device. Based on the status signal, the playback device of the machine determines whether or not to play back the stream being transmitted over a transmission path. When it determines not to play back the stream, the playback device displays a message indicating that the playback process cannot be performed currently.

As described above, according to the present embodiment, a device that executes the stream playback in a home network judges whether a time stamp is valid or invalid, and determines whether or not to play back the stream being transmitted over a transmission path. With this structure, it is possible to preliminarily prevent an erroneous playback of an image which might occur in the burst transmission when the PLL circuit cannot be locked.

### <Supplementary Notes>

Up to now, the best mode for carrying out the invention, as far as known to the applicant at this time of filing the present application, has been described. However, further improvements or modifications can be made on the present invention in terms of the following technical topics. It should be noted here that whether or not to adopt the embodiments described above or to make improvements or modifications is optional and depends on the implementer of the invention.

### <Relay Point>

The above embodiments describe the transfer device of the present invention as being placed at a relay point on the network. However, the transfer device of the present invention may be a device that functions as a supply point for supplying streams, such as a broadcast receiving device or a reading device for reading information from a recording medium. This is because even such a device can achieve the above-described object by selecting an appropriate transmission method among a plurality of transmission methods.

### <Selecting Transmission Method>

Embodiment 1 shows an example in which it is judged whether a time stamp is valid or invalid, and a transmission method is selected for use depending on the judgment result. However, not limited to this means, all the streams may be transmitted by the PCR reference transmission method.

### <Use as Archive Device>

Embodiment 3 is characterized in that a transport stream with destroyed isochronism can be transmitted onto an isochronous transmission path so as to be restored and played back at a standard speed. Further, different from a conventional structure for a high-speed transmission, there is no need to newly prepare a command between devices, which produces an advantageous effect of being able to use a conventional command system.

For example, the transfer device can transmit a stream to a D-VHS tape recorder at a high speed. The D-VHS tape recorder records the stream thereon, and returns the stream to the transfer device as necessary so that the stream can be played back at a standard speed. Namely, an old-type device can be used as an archive device. According to conventional technologies, a high-speed transfer is only available between newly designed devices. The structure of the present invention enables an old-type device to be used without discarding it. It should be noted here that when a stream is recorded onto a conventional device, the conventional device cannot restore the isochronism, and the recorded stream itself cannot be played back as video and/or audio. Accordingly, the fact needs to be recognized by the user before the user uses this function.

### <Stream Analysis>

The flowchart of Fig. 9 in Embodiment 1 shows a process that functions effectively when the transport stream stored in the storage unit 2 is an ideal stream. Although not included in Fig. 9, there is a case where an obtained transport stream may include missing data or defect data. Such a problem may happen when the condition of the transmission path is not good. Such an erroneous condition of the transmission path may occur, for example, when the weather condition is not good during a satellite broadcast, or when a cable connection is deteriorated during an interface transmission. When data deterioration occurs, the data deterioration should be handled separately in an abnormality handling process. As one example of handling the abnormality, known is a method in which processes resembling to each other are performed onto a plurality of portions, and a determination is made according to the principle of majority decision. There is also a case where, when transport streams are not received and recorded continuously but are recorded fragmentarily, a plurality of programs are concatenated in one program. In this case, the PCR values are deviated greatly at the boundary. The process shown in Fig. 9 cannot be applied to this case as it is. However, the process shown in Fig. 9 can be applied to this by treating the boundary as a discontinuous point, suspending the playback (transmission) operation, and then resuming it.

### <Application of Dubbing Process>

Each embodiment is described on the presumption that the transfer process is a dubbing. Here, "dubbing" is a process in which a stream is copied to another device while keeping the original stream in the source device. In addition to "dubbing", there is available a "move" that is a process in which a stream is copied to another device while deleting the original stream from the source device. The transfer process described in each embodiment can also be applied to the "move".

### <Contents of Determination Table>

Embodiment 4 can be modified as follows to produce the same advantageous effects. That is to say, specific broadcast stations and/or channels that increase the bit rate variation of the stream are preliminarily detected based on the implementation specification of a receiver that extracts necessary programs from a broadcast transport stream by the partializing. Then the detected broadcast stations and/or channels are written in the determination table as providers, and each of the broadcast stations and/or channels is associated with the time stamp attachment transmission or the PCR reference transmission.

In general, each broadcast station and channel uses different equipment. Due to this, each broadcast station and channel may have a different partial bit rate variation after multiplexing, depending on the broadcast equipment. Such a bit rate variation can be detected when the method described in Embodiment is adopted. However, a missing packet may be found after a transport stream is played back and a disturbed image is observed, and the information of this may not be obtained immediately before the transmission. As a countermeasure to this, a transport stream for test may be transmitted preliminarily at the product design stage to measure the performance level of the transmission destination, and the result may be reflected onto the determination table of the time stamp type judging unit 5.

On the other hand, such a method requires a preliminary search regarding all the types of connection devices, and is not effective for unknown devices. As a further application of the above-described method, a means for notifying the transfer speed upper limit may be prepared between devices. However, this method has a limitation that it cannot be applied to old-type devices.

### <Timing of Stream Analysis>

Embodiment 1 describes an example in which a judgment on the type is made before a stream is transmitted. However, the judgment performed by the time stamp type judging unit 5 should not necessarilybe immediately before the start of the transmission. In stead, for example, the analysis/judgment may be performed while a program is being obtained from an external source, or immediately after a program is obtained from an external source.

### <Rewriting PCR>

Embodiment 5 describes an example in which transport streams are divided into groups such as the n^{th} group. However, in almost every stream in the actuality, the start and end are not complete as a group. That is to say, a PCR packet may not be included in the start of a transport stream, and the end of a transport stream may not be immediately before a PCR packet. The start and end of the transport stream of such nature can be handled by using difference-between-packets values that are obtained from adjacent PCR groups.

The MPEG standard defines that the PCR packet insertion cycle should not be longer than 100msec.
In the present embodiment, there is a possibility that, when the transmission time is brought forward as the PCR value of PCR packet is rewritten, the packet interval to the next PCR packet exceeds 100msec greatly. To prevent this, the value to be rewritten may be monitored not to exceed a predetermined range, and when the value exceeds the predetermined range, Null packets or the like may be inserted as proposed in a conventional method. With such an arrangement, it is possible to prevent the PCR packet transmission cycle from exceeding the value defined in the standard.

Alternatively, when it is expected that the PCR packet insertion cycle for a stream does not meet the standard, a normal time stamp transmission may be selected, without selecting the PCR reference transmission, as indicated in Embodiment 1.
The PCR reference transmission unit 9 in Embodiment 5 can transmit a transport stream at a constant transfer speed by loading a fixed value, not a variable value, as an initial vale of the down counter 35 . Such a transport stream transmitted at a constant transfer speed can be transmitted onto a conventional transmission path that assures the isochronism of IEEE1394 interface or the like.

When a reception side of a transport stream transmitted at a speed other than the real time is the DTV/STB, locking the PLL may become unavailable and an unauthorized time stamp may be attached in the reception side.
Even if an unauthorized time stamp is attached, when the transfer device is located at a relay point between the transmission side and the reception side, the time stamp type judging unit 5 of the transfer device judges whether the time stamp has been correctly attached, and the stream is transmitted by the PCR reference transmission. Namely, with this structure where the transfer device is located at a relay point between the transmission side and the reception side, it is possible to play back for display and transmit stably, while achieving a high-speed dubbing using a real-time transmission path, which has been difficult to achieve conventionally.

The transfer device in Embodiment 5 enables an old-type device, such as a D-VHS tape recorder, to be used as an archive device. For example, the transfer device may transmit a program to a D-VHS tape recorder at a high speed. The D-VHS tape recorder records the program thereon. When the program is played back, the transport stream is returned from the D-VHS tape recorder to the transfer device, and the transfer device performs the PCR reference transmission to cause the DTV/STB to perform the real-time playback. Such a transfer device is provided with a new use thereof.

### <Time StampAttachment Excluding Case of Real-Time Transfer>

When the burst transmission is performed, the isochronism is not required with respect to the attachment of the time stamp. For this reason, this function can be achieved by a process in which a microprocessor or the like write the calculation result. In a conventional method, a desired time stamp is generated by locking the PLL to the PCR, and the same amount of real time as the normal playback is required. In contrast, the above-described writing process achieves a high-speed transmission.

### <Realization of Control Procedure>

Both the control procedures explained in the above-described embodiments using the flowcharts and the control procedures of the functional components explained in the above-described embodiments satisfy the requirements for the "program invention" since the above-mentioned control procedures are realized concretely using the hardware resources and are the creation of a technical idea utilizing natural laws.

### ■ Production of Program of Present Invention

The program of the present invention is an object program that can execute on a computer. The object program is composed of one or more program codes that cause the computer to execute each step in the flowchart or each procedure of the functional components. There are various types of program codes such as the native code of the processor, and JAVA™ byte code. There are also various forms of realizing the steps of the program codes. For example, when each step can be realized by using an external function, the call statements for calling the external functions are used as the program codes. Program codes that realize one step may belong to different object programs. In the RISC processor in which the types of instructions are limited, each step of flowcharts may be realized by combining arithmetic operation instructions, logical operation instructions, branch instructions and the like.

The program of the present invention can be produced as follows. First, the software developer writes, using a programming language, a source program that achieves each flowchart and functional component. In this writing, the software developer uses the class structure, variables, array variables, calls to external functions, and so on, which conform to the sentence structure of the programming language he/she uses.

The written source program is sent to the compiler as files. The compiler translates the source program and generates an obj ect program.
The translationperformedby the compiler includes processes such as the sentence structure analysis, optimization, resource allocation, and code generation. In the sentence structure analysis, the characters and phrases, sentence structure, and meaning of the source program are analyzed and the source program is converted into an intermediate program. In the optimization, the intermediate program is subjected to such processes as the basicblocksetting, control flowanalysis, anddataflowanalysis. In the resource allocation, to adapt to the instruction sets of the target processor, the variables in the intermediate program are allocated to the register or memory of the target processor. In the code generation, each intermediate instruction in the intermediate program is converted into a program code, and an object program is obtained.

After the object program is generated, the programmer activates a linker. The linker allocates the memory spaces to the object programs and the related library programs, and links them together to generate a load module. The generated load module is based on the presumption that it is read by the computer and causes the computer to execute the procedures indicated in the flowcharts and the procedures of the functional components. The program of the present invention can be produced in this way.

### ■ Use of Program of Present Invention

The program of the present invention can be used as follows.

### (i) Used as Embedded Program

When the program of the present invention is used as an embedded program, the load module as the program is written into an instruction ROM, together with the Basic Input/Output System (BIOS) program and various pieces of middleware (operation systems). The program of the present invention is used as the control program of the transfer device as the instruction ROM is embedded in the control unit and is executed by the CPU.

### (ii) Used as Application

When the transfer device is a hard-disk-embedded model, the Basic Input/Output System (BIOS) program is embedded in an instruction ROM, and various pieces of middleware (operation systems) are preinstalled in the hard disk. Also, a boot ROM for activating the system from the hard disk is provided in the transfer device.

In this case, only the load module is supplied to the transfer device via a transportable recording medium and/or a network, and is installed in the hard disk as one application. This enables the transfer device to perform the bootstrapping by the boot ROM to activate an operation system, and then causes the CPU to execute the installed load module as one application so that the program of the present application can be used.

As described above, when the transfer device is a hard-disk-embedded model, the program of the present invention can be used as one application. Accordingly, it is possible to transfer, lend, or supply, via a network, the program of the present invention separately.

### <Control Unit 4, Time Stamp Type Judging Unit 5>

Components such as the control unit 4, the time stamp type judging unit 5 described above in the embodiments can be realized as one system LSI.

The system LSI is obtained by implementing a bear chip on a high-density substrate and packaging them. The system LSI is also obtained by implementing a plurality of bear chips on a high-density substrate and packaging them, so that the plurality of bear chips have an outer appearance of one LSI (such a system LSI is called a multi-chip module).
The system LSI has a QFP (Quad Flat Package) type and a PGA (Pin Grid Array) type. In the QFP-type system LSI, pins are attached to the four sides of the package. In the PGA-type system LSI, a lot of pins are attached to the entire bottom.

These pins function as an interface with other circuits. The system LSI, which is connected with other circuits through such pins as an interface, plays a role as the core of the transfer device.
The bear chip packaged in the system LSI includes a front-end unit, a back-end unit, and a digital processing unit. The front-end unit digitizes analog signals. The back-end unit converts digital data obtained through digital processes into the analog format and outputs the analog data.

The internal-structure components shown in the above-described embodiments are implemented in the digital processing unit.
As described above in "Used as Embedded Program", the load module as the program, the Basic Input/Output System (BIOS) program and various pieces of middleware (operation systems) are written into an instruction ROM. The maj or improvement of the embodiments is achieved by the load module as the program. It is therefore possible to produce a system LSI of the present invention by packaging the instruction ROM, in which the load module as the program is stored, as the bear chip.

In regards with a specific implementation method, it is preferable to use the SoC implementation or the SiP implementation. TheSoC (System on Chip) implementation is a technology for printing a plurality of circuits onto a chip. The SiP (System in Package) implementation is a technology for packaging a plurality of circuits by resin or the like. Through these processes, a system LSI of the present invention can be produced based on the internal structure of the transfer device described in each embodiment above.

It should be noted here that although the term LSI is used here, it may be called IC, LSI, super LSI, ultra LSI or the like, depending on the level of integration.
Further, part or all of the components of each recording/transfer device may be achieved as one chip. The integrated circuit is not limited to the SoC implementation or the SiP implementation, but may be achieved by a dedicated circuit or a general purpose processor. It is also possible to achieve the integrated circuit by using the FPGA (Field Programmable Gate Array) that can be re-programmed after it is manufactured, or a reconfigurable processor that can reconfigure the connection and settings of the circuit cells inside the LSI. Furthermore, a technology for an integrated circuit that replaces the LSI may appear in the near future as the semiconductor technology improves or branches into another technologies. In that case, the new technology may be incorporated into the integration of the functional blocks constituting the present invention as described above. Such possible technologies include biotechnology.

### Industrial Applicability

The transfer device of the present invention can be mass-produced based on the internal structures of them shown in the embodiments above. As such, the transfer device of the present invention has the industrial applicability.

## Claims

1. A transfer device for transferring a stream to another device, the stream being classified into a plurality of types including (i) a type where each of packets constituting the stream is attached with a time stamp and (ii) another type where each packet is not attached with the time stamp, the transfer device comprising:
a determination unit operable to determine a type of the stream to be transferred, among the plurality of types; and
a selection unit operable to select, among a plurality of transmission methods, a transmission method which corresponds to the type determined by the determination unit.

2. The transfer device of Claim 1, wherein
the plurality of transmission methods include:
a first transmission in which each packet is transmitted in a state where a time stamp indicating isochronism is attached thereto; and
a second transmission in which each packet is transmitted after a packet transmission interval is adjusted for each packet in accordance with a clock reference value contained in each packet,
the plurality of types of streams include a valid type in which each packet is attached with a valid time stamp, and an invalid type in which each packet is attached with an invalid time stamp,
the selection of the first transmission is performed when the determination unit determines the valid type, and
the selection of the second transmission is performed when the determination unit determines the invalid type or determines that the stream to be transferred is not attached with a time stamp.

3. The transfer device of Claim 2, wherein
a detection unit operable to, when the selection unit selects the first transmission, detect a timing when a bit rate exceeds a predetermined value while the stream is being transferred, and
the selection of the second transmission is performed after the detected timing has passed.

4. The transfer device of Claim 2, wherein
the clock reference value is stored in a PCR packet,
the packet transmission interval for the second transmission is a count number of a standard clock that is obtained by dividing a time difference by the number of packets between a PCR packet and a next PCR packet, the time difference being a difference between a value of the PCR packet and a value of the next PCR packet, and
the transfer device comprises
a rewriting unit operable to rewrite a PCR value of the next PCR packet, using a remainder of the division, and
after the rewriting unit rewrites the PCR value of the next PCR packet, a count number of the standard clock is re-calculated by dividing another time difference by the number of packets between the rewritten PCR packet and a further next PCR packet, said another time difference being a difference between a value of the rewritten PCR packet and a value of the further next PCR packet.

5. The transfer device of Claim 4 further comprising
a generating unit operable to, in executing the second transmission, detect storage positions of PCRpackets in the stream, and generate management information that indicates the storage positions, and
when a playback of the stream is performed, the PCR packets are extracted by referring to the storage positions indicated by the management information.

6. The transfer device of Claim 1, wherein
the plurality of transmission methods include:
a first transmission in which each packet is transmitted in a state where a time stamp indicating isochronism is attached thereto; and
a second transmission in which the time stamp is deleted from each packet, a time stamp is attached newly to each packet, and then each packet is transmitted,
the plurality of types of streams include a valid type in which each packet is attached with a valid time stamp, and an invalid type in which each packet is attached with an invalid time stamp,
the selection of the first transmission is performed when the determination unit determines the valid type, and
the selection of the second transmission is performed when the determination unit determines the invalid type.

7. The transfer device of Claim 6, wherein
the selection of the first transmission or the second transmission is performed when a transmission destination device is a drive device for an optical disc, and a standard for an application layer of the optical disc defines that the stream should be recorded in a state where the time stamp is attached to each packet.

8. The transfer device of Claim 1, wherein
a process for judging whether each packet is attached with the time stamp includes an analysis process for analyzing a position where the time stamp is attached, or for analyzing how many bytes are assigned to the time stamp.

9. The transfer device of Claim 1, wherein
a stream in which the invalid time stamp is attached to each packet is a stream where an error between (i) a difference value between time stamps attached to a continuous series of PCR packets and (ii) a difference value between standard times described in the continuous series of PCR packets, is larger than a predetermined error value.

10. The transfer device of Claim 1, wherein
a stream in which the invalid time stamp is attached to each packet is a stream where a time interval indicated by the time stamp attached to each packet is shorter than a predetermined minimum interval.

11. The transfer device of Claim 1, wherein
the determination unit is provided with a determination table that recites the plurality of transmission methods in correspondence with a plurality of transfer source devices and/or a plurality of transfer destination devices, and
the selection by the selection unit is performed so as to select, among the plurality of transmission methods, a transmission method which corresponds to a device that has transmitted the stream and/or a device to which the stream is to be transmitted.

12. A transfer device for receiving a packet that was transmitted by a device onto a transmission path, and transfers the received packet to another device, the transfer device comprising:
a reception unit operable to receive a packet that was transmitted onto the transmission path by a burst transmission;
a storage unit operable to store each packet received by the reception unit; and
a transmission unit operable to read a plurality of packets from the storage unit, and transmit the read plurality of packets to a transfer destination device while adjusting a transmission interval of the plurality of packets.

13. The transfer device of Claim 12, wherein
packets constitute a transport stream received by a device in a network,
the packet that was transmitted onto the transmission path by the burst transmission was transmitted onto the transmission path by the device, not based on a reception time axis, and
the adjustment of the transmission interval of the plurality of packets by the transmission unit is performed by making a transmission interval of each packet constant based on clock reference values that are included in a plurality of packets.
